# EUROPÄISCHE PATENTANMELDUNG

(11) **EP 2 252 110 A1**
(43) Veröffentlichungstag der Anmeldung: **17.11.2010**
(21) Anmeldenummer: 10175276.4
(22) Anmeldetag: 02.07.2009
(51) Int. Cl.: H04W 40/00, H04L 12/56, H04W 24/02, H04W 84/18, H04W 52/02

(54) **Kommunikationsverfahren für ein Funknetzwerk und Verwendung einer energieautarken Sende-/Empfangsvorrichtung**

(30) Priorität: 02.07.2008 DE 102008031407
(62) Teilanmeldung aus: 09164480.7
(71) Anmelder: EnOcean GmbH, 82041 Oberhaching (DE)
(72) Erfinder: Schmidt, Frank, 82054, Altkirchen (DE); Heller, Wolfgang, 85551, Kirchheim (DE); Berghald, Frank, 81476, München (DE); Brehler, Markus, 82065, Baierbrunn (DE); Lopez De Arroyabe, Jose, 81541, München (DE)
(74) Vertreter: Epping - Hermann - Fischer

(57) **Zusammenfassung**

Die Erfindung betrifft ein Kommunikationsverfahren für ein Funknetzwerk mit mindestens einem Kommunikationsknoten mit beschränkten Energiereserven "E" und mindestens einem Kommunikationsknoten mit drahtgebundener Energieversorgung "D" und ggf. einem oder mehreren Vermittlungsknoten (V11 bis V33), wobei
- der Kommunikationsknoten "E" zunächst eine erste Funknachricht absendet,
- der Kommunikationsknoten "E" danach in einen Strom sparenden Modus schaltet,
- der Kommunikationsknoten "E" nach Ablauf einer fixen oder veränderlichen Zeitspanne ein zweites Funksignal sendet, welches eine Rückantwort aus dem Kommunikationssystem des Kommunikationsknotens "D" und gegebenenfalls der Vermittlungsknoten (V11 bis V33) auslöst,
- die Rückantwort bereits im Kommunikationsknoten "D" oder einem der Vermittlungsknoten (V11 bis V33) zwischengespeichert wurde und
- die Rückantwort kurz nach dem Absenden des zweiten Funksignals vom Kommunikationsknoten "E" empfangen wird.

## Beschreibung

Die Erfindung betrifft ein Kommunikationsverfahren für ein Funknetzwerk mit Kommunikationsknoten, insbesondere Empfängerknoten, Senderknoten und Vermittlungsknoten, sowie eine Verwendung einer energieautarken Sende-/Empfangsvorrichtung in diesem Verfahren.

Ein Funknetzwerk ist ein Netzwerk von Kommunikationsknoten, in welchem eine Information mittels elektromagnetischer Wellen übertragen wird. Es ist ein leitungsloses Telekommunikationssystem, in dem die Methoden der Funktechnik angewandt werden. Ein Funknetzwerk unterscheidet dabei Senderknoten, welche eine Information absenden, Vermittlungsknoten, welche die Information, welche von Senderknoten abgesendet wurde, an andere Vermittlungsknoten und/oder an einen Empfängerknoten weiterleiten, und Empfängerknoten, welche ein Ziel einer von einem Senderknoten abgesendeten Information sind. Jeder Sendeknoten ist dem zufolge dazu ausgebildet, Funknachrichten zumindest abzusenden. Jeder Vermittlungsknoten ist dazu ausgebildet, Funknachrichten zu empfangen und nach dem Empfang wieder abzusenden. Jeder Vermittlungsknoten erfüllt dem zufolge auch die Mindestanforderung für einen Empfängerknoten, der dazu ausgebildet ist, Funknachrichten zumindest zu empfangen. Eine einfache Variante eines Funknetzwerkes besteht dem zufolge zumindest aus einem Senderknoten und einem Empfängerknoten, oder einem Vermittlungsknoten. In der Praxis bestehen Funknetzwerke aus mehreren Senderknoten, Vermittlungsknoten oder Empfängerknoten.

Physikalische Grenzen für den Betrieb von Funknetzwerken sind zum Beispiel in der Sendereichweite einzelner Senderknoten oder Vermittlungsknoten gegeben. So ist es zum Beispiel durchaus möglich, dass eine Entfernung eines Senderknotens von einem Empfängerknoten, welcher Ziel einer vom Senderknoten abgesendeten Nachricht ist, größer als die Reichweite des Senderknotens ist. Demzufolge sind solche Funknetzwerke immer so angelegt, dass innerhalb der Reichweite eines Sender-, Empfänger- oder Vermittlungsknotens zumindest ein weiterer Empfänger- oder Vermittlungsknoten angeordnet ist. Somit sind auch Strecken überwindbar, die über die Reichweite eines einzelnen Sender- oder Vermittlungsknotens hinausgehen. Die einzelnen Funknachrichten werden in einem solchen Fall, von einem Senderknoten über die erreichbaren Vermittlungsknoten zu einem Empfängerknoten vermittelt. Dabei werden parallel mehrere Vermittlungsknoten mit der Vermittlung belastet. Die Nachricht wird somit über mehrere zufällig gebildete Übermittlungspfade zum Empfänger geleitet.

Die Vermittlung der Funknachrichten in dem Funknetzwerk führt zu einem hohen Datenübertragungsvolumen im Funknetzwerk bis jede Nachricht die von einem Senderknoten abgesendet wird ihr Ziel, einen Vermittlungsknoten oder einen Empfängerknoten erreicht hat.

Der Einsatz von Kommunikationsknoten mit beschränkten Energieressourcen ist erschwert, da die Kommunikationsknoten stark beansprucht werden und demzufolge einen hohen Leistungsverbrauch aufweisen.

Es ist eine Aufgabe der Erfindung, ein Vermittlungsverfahren in einem Funknetzwerk zu verbessern und einen energieoptimierten Sende-/Empfangsbetriebs von Kommunikationsknoten mit beschränkten Energieressourcen zu ermöglichen.

Die Aufgabe wird durch ein Kommunikationsverfahren gelöst, bei dem mindestens ein Kommunikationsknoten mit beschränkten Energiereserven (z.B. Batteriebetrieb), im Folgenden der Einfachheit halber mit "E" bezeichnet, insbesondere ein energieautarker Kommunikationsknoten und mindestens ein Kommunikationsknoten mit drahtgebundener Energieversorgung, im Folgenden der Einfachheit halber mit "D" bezeichnet, gegebenenfalls über einen oder mehrere Vermittlungsknoten, im Folgenden der Einfachheit halber mit "V" bezeichnet, miteinander bidirektional kommunizieren. Um dies mit den beschränkten Energiereserven der z.B. energieautark betriebenen Knoten "E" zu ermöglichen, senden diese zunächst eine erste Funknachricht, welche, ggf. über einen oder mehrere Vermittlungsknoten "V", einen Kommunikationsknoten "D" ohne energetische Betriebsbeschränkung erreicht. Nach Absenden dieser ersten Funknachricht geht "E" vorzugsweise in einen Betriebsmodus mit geringem Stromverbrauch, in dem kein Signalempfang möglich ist. Die Funknachricht kann Aktionen auslösen, z.B. über ein an "D" angeschlossenes Bussystem, oder auch direkt in den an "D" angeschlossenen Geräten. Insbesondere kann auch eine Rückantwort an "E" angefordert werden, welche z.B. Informationen über die erfolgreiche Bearbeitung des ersten Funksignals, Anzeigewerte für "E" oder Parameter für den weiteren Betrieb von "E" enthalten kann. Diese Rückantwort wird nun in einem dem Kommunikationsknoten "E" möglichst "nahen" (im Sinne einer geringen Signaldämpfung) Kommunikationsknoten abgelegt - das kann "D" selbst sein oder auch einer der Vermittlungsknoten "V", sofern diese eingesetzt werden. Nach einer vordefinierten Zeit wird "E" nun erneut aktiv und sendet ein zweites Funksignal aus, mit dem die bereits in die "Nähe" transportierte Rückantwort angefordert wird. Kurz darauf schaltet "E" in den Empfangsmodus. Die dafür erforderlichen Zeiten können fix sein oder variabel veränderbar. Auf diese Weise werden unnötige Bereitschaftszeiten des Empfangsbetriebes von "E" minimiert, die insbesondere dann entstehen würden, wenn die Rückantwort in einem komplexen System erst generiert werden muss oder wenn über mehrere Vermittlungsknoten "V" schrittweise herantransportiert werden muss. Damit ist die Aufgabe eines energieoptimierten Sende-/Empfangsbetriebs, der für die Realisierung dieser Technologie eine entscheidende Rolle spielt, energieautarker Kommunikationsknoten im Funksystem erfindungsgemäß gelöst.

Die Verwendung einer oder mehrerer energieautarker Sende-/Empfangsvorrichtungen in dem genannten Verfahren erlaubt einen besonders energieeffizienten Sende-/Empfangsbetrieb.

Bevorzugt werden zur Ersteinrichtung einer Verbindung zwischen einem Kommunikationsknoten "E" und einem Kommunikationsknoten "D" beide in einen Einlernmodus versetzt, worauf dann entweder "D" oder "E" die Einlernprozedur zuerst aktiv mit Funksignalen initialisiert. Das Aktivieren des Einlernmodus erfolgt beispielsweise manuell durch Drücken von Tasten an "D" und "E".

Ein vorgenanntes Kommunikationsverfahren kann beispielsweise ein Initialisierungsverfahren für ein Funknetzwerk oder ein Betriebsverfahren für ein Funknetzwerk umfassen. Weiterbildungen dieser einzelnen Verfahren werden nachfolgend beschrieben.

Es ist vorgesehen, mittels eines Initialisierungsverfahrens für ein Funknetzwerk eine Zuordnung von zumindest einem Senderknoten zu zumindest einem Vermittlungsknoten auszubilden. Der ausgewählte Vermittlungsknoten ist ausgebildet, Funknachrichten zu empfangen, und wirkt somit nicht nur als Vermittlungsknoten, sondern wirkt auch als Empfängerknoten. Zu Beginn des Initialisierungsverfahrens erfolgt am Empfängerknoten beziehungsweise am Vermittlungsknoten eine Anmeldung des Senderknotens. Der Vermittlungsknoten ist zur besseren Unterscheidung von anderen Vermittlungsknoten beziehungsweise von anderen Empfängerknoten, im Folgenden als Zielknoten bezeichnet. Anschließend erfolgt die Verbreitung der bei der Anmeldung des Senderknotens am Zielknoten erzeugten Anmeldeinformationen an und über sämtliche im Funknetzwerk erreichbaren Vermittlungsknoten. Bei jedem Vermittlungsknoten erfolgt eine Speicherung der Anmeldeinformation in einem vorbestimmten Speicher.

Ein Speicher im Sinne der Erfindung ist ein elektronischer Speicher, bevorzugt ein nichtflüchtiger elektronischer Speicher, welcher bevorzugt in jedem Vermittlungsknoten und Empfängerknoten vorgesehen ist, und auch in jedem Senderknoten vorgesehen sein kann.

Unter Initialisierung ist ein Verbreiten der Anmeldeinformation im Netzwerk und damit ein Verbreiten der Zuordnung des Senderknotens zum Zielknoten im Netzwerk zu verstehen. Initialisierung bedeutet weiter, ein Vorbereiten des Funknetzwerks und damit der Vermittlungsknoten des Funknetzwerks auf künftige Funknachrichten, welche im Rahmen des Initialisierungsverfahrens zum Beispiel ausgehend von dem Senderknoten über Vermittlungsknoten des Funknetzwerks an den Zielknoten vermittelt werden sollen.

Ein Senderknoten umfasst zumindest ein Mittel, um Funknachrichten zu senden. Weiter umfasst ein solcher Senderknoten eine Identifikationsnummer, mit der der Senderknoten zumindest in dem Funknetzwerk eindeutig bezeichnet ist.

Ein Vermittlungsknoten umfasst zumindest ein Mittel, um Funknachrichten zu empfangen und ein weiteres Mittel, um diese Funknachrichten zu senden. Weiter umfasst ein Vermittlungsknoten eine Identifikationsnummer, mit der der Vermittlungsknoten in dem Funknetzwerk eindeutig bezeichnet ist. Bevorzugt ist der Vermittlungsknoten ausgebildet energieautark mit Umgebungsenergie betrieben zu werden. Derartige Vermittlungsknoten sind mit einem Energiewandler und/oder einem Energiespeicher gekoppelt, welcher ausgebildet ist, in der Umgebung des Vermittlungsknotens befindliche Primärenergie in elektrische Energie zu wandeln. Eine solche Primärenergie ist zum Beispiel aus Wärme, Licht, Druck oder andere physikalischen Parameter gebildet. Auch ein elektromagnetisches Feld aus der Umgebung des Vermittlungsknotens kann dabei als Energiequelle für den Vermittlungsknoten dienen. Eine derartige Energieversorgung wird unter dem Begriff "Energy Harvesting" zusammengefasst.

Ein Empfängerknoten umfasst zumindest ein Mittel, um Funknachrichten zu empfangen und ein weiteres Mittel, um diese Funknachrichten zu senden, auszuwerten und diese an eine weitere Vorrichtung weiterzugeben. Dazu ist der Empfängerknoten mit der weiteren Vorrichtung entweder drahtlos, oder drahtgebunden gekoppelt oder zumindest koppelbar. Beispiele für solche weiteren Vorrichtungen sind: Schaltaktoren für Beleuchtungsanlagen, Schaltaktoren für Beschattungsanlagen wie Jalousien an Gebäuden, Zentrale Empfänger zur weiteren Verarbeitung der Funknachricht, Schaltaktoren für Klimaanlagen und Heizanlagen und ähnliches. Zudem kann ein Empfängerknoten auch ein Mittel umfassen, die empfangenen Funknachrichten drahtlos weiterzusenden.

Bevorzugt umfasst ein Vermittlungsknoten auch die Mittel eines Empfängerknotens, und ist dem zufolge dann mit der weiteren Vorrichtung koppelbar. So lässt sich im Funknetzwerk ein Gerätetyp einsparen und ein Funknetzwerk bilden, welches mit Senderknoten und Vermittlungsknoten betrieben werden kann.

Bei der Anmeldung des Senderknotens am Zielknoten wird dem Zielknoten die Identifikationsnummer des Senderknotens vermittelt. Somit sind diese beiden Knoten mittels dieser Zuordnungsinformation zueinander gekoppelt. Daraus ergibt sich der Vorteil, dass die Funknachricht, welche von dem Senderknoten abgesendet wird, lediglich die Nachricht selbst mit der Identifikationsnummer des Senderknotens umfassen muss. Eine zusätzliche Übermittlung der Identifikationsnummer des Zielknotens ist durch die bei der Anmeldung bewirkte Kopplung von dem Zielkonten mit dem Senderknoten nicht notwendig. Damit ist weiter vorteilhaft erreichbar, dass der Senderknoten mit einem unidirektionalen Sendebetrieb ausreichend im Funknetzwerk einsetzbar ist, da eine Bestätigungsnachricht über eine erfolgreiche Übertragung nicht notwendig ist. Durch die Koppelung ist das Ziel jeder von dem Senderknoten abgesendeten Funknachricht vorbestimmt. Daraus wiederum ergibt sich ein weiterer Vorteil, der sich in der Energieversorgung des Senderknotens zeigt. Der Senderknoten kann so für einen unidirektionalen Betrieb ausgebildet sein. Das heißt der Senderknoten umfasst lediglich das Mittel zum Senden von Funknachrichten. Ein Mittel zum Empfang einer Funknachricht, zum Beispiel einer Empfangsbestätigung des Zielknotens ist nicht notwendig. Damit kann der Betrieb des Senderknotens auch auf den kurzen Zeitraum des Sendens der Funknachricht begrenzt werden. So sind energieautarke Funksensoren oder Funkschalter als Senderknoten verwendbar. Energieautarke Senderknoten haben eine eigene Energieversorgung, welche zumindest aus einem Energiewandler und gegebenenfalls einem Energiespeicher gebildet ist. Der Energiewandler wandelt aktionsbezogene Energie, zum Beispiel Bewegung, oder Umgebungsenergie, wie zum Beispiel Wärme, in elektrische Energie. Mit der so gebildeten elektrischen Energie wird der Senderknoten betrieben. Ein solcher Senderknoten kann dann vollkommen unabhängig von einer anderen elektrischen Energiequelle, wie zum Beispiel einer Batterie oder einem Energieversorgungsnetz betrieben werden.

Die Anmeldung des Senderknotens am Zielknoten wird zum Beispiel wie folgt durchgeführt. Der Senderknoten wird für die Anmeldung am Zielknoten in die unmittelbare Nähe des Zielknotens gebracht. Damit das folgende, vom Senderknoten abgesendete Anmeldesignal lediglich den oder die gewünschten Zielknoten erreicht, wird die abgestrahlte Sendeleistung am Sender hierzu vermindert. Die Sendeleistung wird dabei so gewählt, dass nur unmittelbar in der Umgebung des Senders befindliche Zielknoten das Anmeldesignal des Senders empfangen. Somit wird nur an diesen Zielknoten der Anmeldeschritt eingeleitet und das Initialisierungsverfahren begonnen. Zur Verminderung der Sendeleistung und zum Auslösen der Anmeldung am Zielknoten umfasst der Sendeknoten ein geeignetes Mittel, zum Beispiel einen Druckschalter mittels dem die eben beschriebenen Vorgänge auslösbar sind.

Eine weitere Möglichkeit die Anmeldung des Senderknotens am Zielknoten durchzuführen ist durch einen Computer gegeben, welcher über eine drahtlose Schnittstelle in das Netzwerk integrierbar ist und ausgebildet ist, mit jedem vom Funknetzwerk umfassten Empfängerknoten, Vermittlungsknoten und Senderknoten, sofern der Senderknoten auch eine Empfangseinheit umfasst, eine drahtlose Nachrichtenübermittlung zu betreiben. Damit kann eine Anmeldung des Senderknotens auch mit dem Computergerät durchgeführt werden. Bevorzugt ist das Computergerät weiter ausgebildet, die Zuordnung des Sendeknotens zum Empfängerknoten im Funknetzwerk zu verbreiten und ausgewählte Vermittlungsknoten zu übermitteln.

Alternativ zu den beiden vorstehend beschriebenen Varianten zur Anmeldung des Senderknotens am Zielknoten ist vorgesehen, am Zielknoten vor dem Absenden der Anmeldeinformation mittels einer Taste das Initialisierungsverfahren einzuleiten. Die dann im Folgenden von dem Zielknoten empfangene Funknachricht wird so als Anmeldeinformation des Senderknotens ausgewertet und somit die Zuordnungsinformation gebildet.

Auch eine Kombination der beiden Varianten, Vermindern der Sendeleistung am Senderknoten und Einleiten des Initialisierungsverfahrens am Zielknoten ist möglich.

Hat der Zielknoten die Anmeldeinformation erhalten, erfolgt ein Verknüpfen der Anmeldeinformation mit der Identifikationsnummer des Zielknotens und ein Senden der so gebildeten Zuordnungsinformation vom Zielknoten aus. Somit umfasst die gesendete Funknachricht die Identifikationsnummer des Senderknotens und die Identifikationsnummer des Zielknotens und damit die Zuordnungsinformation.

Damit erfolgt ein Verbreiten der Zuordnungsinformation im Funknetzwerk. An jedem Vermittlungsknoten welcher diese Zuordnungsinformation empfängt, erfolgt ein Wechsel in einen Initialisierungszustand und es erfolgt weiter ein Absenden und damit ein Weiterleiten der Zuordnungsinformation an weitere Vermittlungsknoten. Diese Information wird an alle im Funknetz erreichbaren Vermittlungsknoten gesendet beziehungsweise vermittelt. Mit dem Wechsel in den Initialisierungszustand erfolgt auch ein Speichern der Zuordnungsinformation im Speicher jedes Vermittlungsknotens.

Bevorzugt erfolgt die Verbreitung der Zuordnungsinformation an alle Vermittlungsknoten gemäß einer Baumstruktur welche ihren Stamm im Zielknoten hat. Das bedeutet, dass vom Zielknoten ausgehend, gemäß einer Baumstruktur mit immer weitergehenden Verzweigungen die Verbreitung der bei der Anmeldung erzeugten Anmeldeinformation an die Vermittlungsknoten durchgeführt wird.

Initialisierungszustand bedeutet, dass ein Speicherplatz im Speicher an den einzelnen Vermittlungs- und Empfängerknoten für die Dauer des Initialisierungszustands reserviert wird und während des Initialisierungszustands mit Anmeldewerten und Übertragungswerten und Zuordnungswerten zwischen Sender-, Vermittlungs- und Zielknoten gefüllt wird.

Nach dem erfolgten Anmeldevorgang am Zielknoten wird der Sendeknoten an seinen Bestimmungsort gebracht und dort eine Funknachricht am Senderknoten mit unverminderter Sendeleistung gesendet. Diese Funknachricht umfasst zumindest die Identifikationsnummer des Senderknotens und wird von allen Vermittlungsknoten des Funknetzwerks innerhalb der Reichweite des Sendeknotens empfangen. An jedem Vermittlungsknoten welcher diese Funknachricht empfangen hat, erfolgt ein Zuordnen der Funknachricht mittels der Identifikationsnummer des Senderknotens zu dem Zielknoten. Anschließend erfolgen ein Speichern der so gebildeten erweiterten Funknachricht im Speicher und ein Weiterleiten der erweiterten Funknachricht verbunden mit der Identifikationsnummer des weiterleitenden Vermittlungsknotens. Das Vermitteln der Funknachricht über die Vermittlungsknoten kann auch über die vorgenannte Baumstruktur erfolgen.

Somit ist an jedem Vermittlungsknoten im Speicher hinterlegt, welche Funknachricht welchem Zielknoten zugeordnet ist und von welchem Vermittlungsknoten jede Funknachricht empfangen wurde. Dieser Vorgang wird im Netzwerk so lange durchgeführt bis die Funknachricht den Zielknoten erreicht hat.

Der Zielknoten ermittelt aus den eingegangenen Funknachrichten zumindest einen ersten Vermittlungspfad. Bevorzugt ist dies der Vermittlungspfad mit den geringsten Kosten und damit dem kürzestem Vermittlungsweg und der kürzesten Vermittlungszeit. Der beste Vermittlungspfad ist somit mit hoher Wahrscheinlichkeit der kürzeste Übermittlungsweg über die mit dem Initialisierungsverfahren bestimmten Vermittlungsknoten.

Die am Zielknoten empfangene Funknachricht umfasst nun zumindest die Identifikationsnummer des Senderknotens und die Identifikationsnummer des Vermittlungsknotens der die Funknachricht vor dem Empfang durch den Zielknoten zuletzt vermittelt hat. Mit diesen Informationen ist der Weg, über den die Funknachricht im Funknetzwerk vermittelt wurde bis zum Senderknoten zurückverfolgbar.

Mit den während der Vermittlung gespeicherten Pfadinformationen an den einzelnen beteiligten Vermittlungsknoten, wird nun der Weg des zumindest ersten Vermittlungspfads zurückverfolgt und die Vermittlungsinformation an jedem einzelnen am ersten Vermittlungspfad beteiligten Vermittlungsknoten gespeichert. Die Pfadinformationen können dabei auch der entsprechenden Zuordnungsinformation zugeordnet sein. Zusätzlich ist auf gleiche Weise ein zweiter oder beliebiger weiterer Vermittlungspfad zurückverfolgbar und an den jeweils beteiligten Vermittlungsknoten speicherbar. Bevorzugt werden für den späteren Betrieb von stationären Senderknoten zwei Vermittlungspfade mit deren Pfadinformationen gespeichert um zu dem ersten Vermittlungspfad zumindest einen redundanten Vermittlungspfad vorbestimmt und verfügbar zu haben. Für eine Verwendung von mobilen Senderknoten im Funknetzwerk, werden bevorzugt so viele Vermittlungspfade gespeichert und damit ausgewählt, wie Vermittlungsknoten im Funknetzwerk vorhanden sind. Somit ist erreicht, das mittels jedes Vermittlungsknotens im Funknetzwerk, eine von einem mobilen im Funknetzwerk beweglichen Senderknoten gesendete Funknachricht, an den Zielknoten vermittelbar ist.

Die Pfadinformation beschreibt dabei die Routen, beziehungsweise den Weg der Nachricht, über welche Vermittlungsknoten diese durch das Netzwerk vermittelt wird. Jeder Pfadinformation sind Kosten zugeordnet. Diese Kosten beschreiben den Aufwand einer Übermittlung über den zugeordneten Pfad. Das heißt, es wird eine Bewertung der Übertragungsqualität unter einer Berücksichtigung der Knotenanzahl für den gesamten Übermittlungspfad, oder zumindest einem Teil des Übermittlungspfades geführt und gespeichert.

Parallel zu dem eben beschriebenen Vorgang werden an allen Vermittlungsknoten, welche an keinen der ausgewählten Vermittlungspfade beteiligt sind, die Vermittlungsinformationen, beziehungsweise die Pfadinformationen gelöscht. Pfadinformationen, die im Zusammenhang mit mobil im Netz zu betreibenden Senderknoten stehen, werden nicht gelöscht, um die Mobilität dieser Senderknoten nicht auf einen Vermittlungspfad einzuschränken.

Nach Abschluss dieser beiden Vorgänge werden alle Vermittlungsknoten von dem Initialisierungszustand in einen Betriebszustand versetzt. Der Initialisierungszustand ist somit nach dem Empfang der Pfadinformationen des optimalen Vermittlungspfades durch die entsprechenden Vermittlungsknoten beendet.

Das vorstehend beschriebene Initialisierungsverfahren kann mit der bestehenden Zuordnungsinformation, das heißt ohne Änderung der Zuordnungsinformation wiederholt ausgeführt werden, zum Beispiel dann, wenn sich Umgebungsbedingungen im Funknetzwerk verändert haben. Als Auslöseparameter für die wiederholte Initialisierung mit gleicher Zuordnungsinformation kann ein regelmäßiger oder unregelmäßiger, also zufälliger zeitlicher Abstand vorbestimmt werden. Auch kann durch den vorstehend beschriebenen Computer oder durch eine Aktion eines Anwenders an einem der Sendeknoten, Vermittlungsknoten oder Empfängerknoten, das Initialisierungsverfahren erneut eingeleitet werden.

Bevorzugt wird ein jeder Vermittlungsvorgang und damit jeder Sendevorgang der zuvor am Vermittlungsknoten empfangenen Funknachricht von einem vorhergehenden Vermittlungsknoten empfangen und gemäß einer Empfangsbestätigung von diesem ausgewertet. Ein Vermittlungsvorgang ist ein Empfangen einer Nachricht an einem Vermittlungsknoten und das anschließende Senden der Nachricht an einen nächsten Vermittlungsknoten. Demzufolge ist ein Vermittlungsvorgang das "Durchleiten", das Weiterleiten der Information an den nächsten Vermittlungsknoten.

Somit ist zumindest eine Zuordnung zwischen einem Senderknoten und einem Empfängerknoten nach einem Initialisierungsverfahren gemäß dem vorstehend beschriebenen Prinzip vorbestimmbar. Bei einem solchen Funknetzwerk ist zumindest einem Vermittlungsknoten eine Zuordnung zu einem Empfängerknoten, beziehungsweise Zielknoten, bekannt gemacht. Somit ist von einem Senderknoten zu einem Empfängerknoten ein Vermittlungspfad festgelegt, welcher ausschließlich diejenigen Vermittlungsknoten umfasst, welchen die Zuordnung bekannt gemacht ist.

Gemäß einem nachfolgend beschriebenen Betriebsverfahren folgt das Senden und das Vermitteln einer Funknachricht in einem solchen Funknetzwerk den folgenden Schritten:
- Absenden einer Funknachricht am Senderknoten,
- Empfangen der Funknachricht an zumindest einem Vermittlungsknoten und,
- wenn der Vermittlungsknoten nicht der Empfängerknoten ist, Absenden der Funknachricht am Vermittlungsknoten und
- Empfangen der Funknachricht am vorbestimmten Emfängerknoten.

Das Vermitteln der Funknachricht am Vermittlungsknoten umfasst dabei zumindest die Schritte:
- Empfangen der Funknachricht vom Senderknoten und
- Senden der Funknachricht vom Vermittlungsknoten.

Dabei ist in dem Zielknoten und bei jedem an einem vorbestimmten Vermittlungspfad beteiligten Vermittlungsknoten die Identifikationsnummer des Zielknotens und die Identifikationsnummer des Senderknotens gespeichert.

Mit dem vorstehend beschriebenen Initialisierungsverfahren und Betriebsverfahren für das Funknetzwerk ergibt sich ein weiterer Vorteil, der sich in der für die Übermittlung notwendigen Energie niederschlägt. Da die Anzahl der bei einer derartigen Übermittlung beteiligten Vermittlungsknoten begrenzt ist, ist der Energiebedarf für die Übermittlung einer Nachricht ebenfalls begrenzt, so dass Vermittlungsknoten verwendbar sind, die mit sehr geringen Energiemengen betreibbar sind. Das bedeutet, dass ein Einsatz von energieautarken Vermittlungsknoten möglich ist, welche mit der in ihrer Umgebung vorhandenen in elektrische Energie wandelbaren Primärenergie betrieben werden. Dazu umfassen energieautarke Vermittlungsknoten Energiewandler die diese Umgebungsenergie in elektrische Energie wandeln.

Energiewandler, welche die Umgebungsenergie in elektrische Energie wandeln, sind zum Beispiel in den Druckschriften

DE 10125059 B4, EP 01568096 B1, DE 10315765 B4, DE 10315764 B4, oder DE 102006024167 A1 offenbart.

Weiter umfassen solche Vermittlungsknoten Mittel, um Funknachrichten zu empfangen und ein weiteres Mittel, um diese Funknachrichten zu senden. Solche Vermittlungsknoten umfassen zum Beispiel eine Empfängervorrichtung mit einer Antenne, wobei die Antenne eine mit Informationen amplitudenmodulierte elektrische Größe ausgangsseitig bereitstellt. Diese elektrische Größe entspricht dem Sendesignal der Funknachricht. Der Antenne ist ein resistives Element nachgeschaltet. Dem resistiven Element ist eine Auswerteeinheit nachgeschaltet, wobei die Auswerteeinheit zumindest einen physikalischen Parameter des resistiven Elements auswertet, der physikalische Parameter variiert aufgrund der Amplitudenmodulation der elektrischen Größe und am Ausgang der Auswerteeinheit ist das Informationssignal bereitgestellt. Mittels des resistiven Elements weist die Empfängervorrichtung eine hohe Empfindlichkeit auf und kann amplitudenmodulierte Empfangspegel empfangen und demodulieren, die um eine Vielzahl von Größenordnungen, beispielsweise neun Größenordnungen, kleiner als der Sendepegel sind. Da das resistiven Bauelement eine lineare Kennlinie aufweist, ist die Empfindlichkeit des Empfängers zumindest über einen sehr großen Empfangspegelbereich konstant. Die Empfindlichkeit ist dadurch wesentlich höher als bei der Verwendung von Dioden. Dadurch ist das Empfangen von sehr kleinen Pegeln mit einem sehr geringen Einsatz von elektrischer Energie möglich, ohne aufwendige Schaltungskonzepte verwenden zu müssen. Durch eine entsprechende Dimensionierung des resistiven Elements ist es möglich, die Änderungen der physikalischen Parameter mit den

Änderungen der amplitudenmodulierten elektrischen Größen ins Verhältnis zu setzen.

Weitere vorteilhafte Ausgestaltungen sind in den Unteransprüchen sowie in der Figurenbeschreibung offenbart.

Nachfolgend ist ein Ausführungsbeispiel gemäß dem vorstehenden Prinzip unter Zuhilfenahme von 27 Figuren näher erläutert.

Es zeigen:
- Figur 1: eine schematische Anordnung eines Funknetzwerks,
- Figur 2: das Funknetzwerk mit Darstellung von Vermittlungsschritten,
- Figur 3: Anmeldeverfahren eines Senderknotens am Zielknoten,
- Figur 4: Verbreiten der Anmeldeinformation an die Vermittlungsknoten,
- Figur 5: Vermitteln der Anmeldeinformation über einem Vermittlungsknoten,
- Figur 6: Zustand der Vermittlungsknoten nach Übermittlung der Anmeldeinformation,
- Figur 7: Senden einer Funknachricht am Senderknoten,
- Figur 8: Vermitteln der Funknachricht im Funknetzwerk,
- Figur 9: Vermitteln der Funknachricht im Funknetzwerk,
- Figur 10: Vermitteln der Funknachricht im Funknetzwerk,
- Figur 11: Zustand des Funknetzwerkes am Ende der Vermittlung der Anmeldeinformation im Funknetzwerk,
- Figur 12: Rückverfolgung des Vermittlungspfads an die beteiligten Vermittlungsknoten,
- Figur 13: Speichern der Pfadinformation des Vermittlungspfades,
- Figur 14: Speichern der Pfadinformation des Vermittlungspfades,
- Figur 15: Zustand des Funknetzwerks nach Abschluss des Speicherns der Pfadinformation des Vermittlungspfades,
- Figur 16: Abschließen der Initialisierung an allen Vermittlungsknoten,
- Figur 17: Zustand des Netzwerkes nach Abschließen der Initialisierung,
- Figur 18: Versenden einer Funknachricht,
- Figur 19: Weiterleiten der Funknachricht,
- Figur 20: Weiterleiten der Funknachricht,
- Figur 21: Weiterleiten der Funknachricht,
- Figur 22: Anmelden eines mobilen Senderknotens,
- Figur 23: Anmelden eines mobilen Senderknotens,
- Figur 24: Verbreiten der Anmeldeinformation des mobilen Senderknotens an die Vermittlungsknoten,
- Figur 25: Verbreiten der Anmeldeinformation des mobilen Senderknotens an die Vermittlungsknoten,
- Figur 26: Zustand nach der Verteilung der Anmeldeinformation des mobilen Senderknotens,
- Figur 27: Senden einer Funknachricht mittels den mobilen Sender.

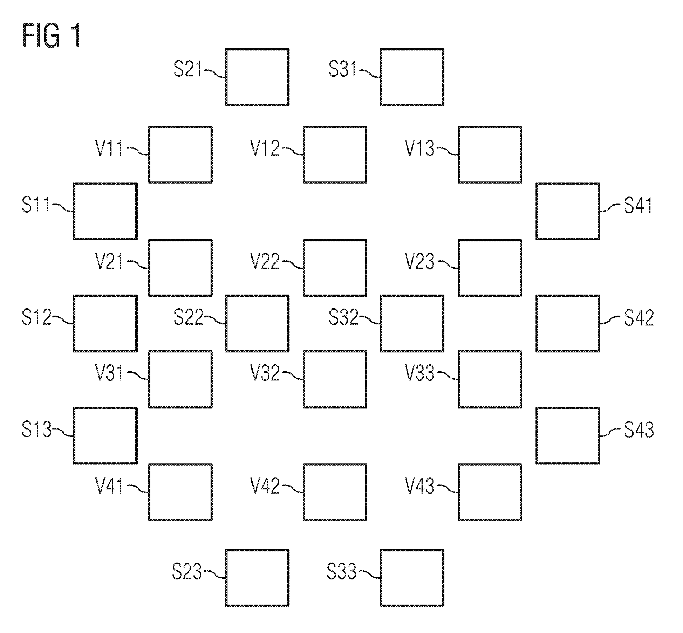

Es zeigt die Figur 1 eine schematische Darstellung eines beispielhaften Funknetzwerkes mit einer Mehrzahl von Senderknoten S11 bis S43 und einer Mehrzahl von Vermittlungsknoten V11 bis V43. Jeder Vermittlungsknoten V11 bis V43 des Ausführungsbeispiels ist dazu ausgebildet, Funknachrichten zu empfangen und Funknachrichten zu senden, und ist mit einer weiteren Vorrichtung koppelbar. Damit kann jeder Vermittlungsknoten V11 bis V43 auch als Empfängerknoten verwendet werden. Diese vorteilhafte Eigenschaft ist in dem im Folgenden beschriebenen und dargestellten Ausführungsbeispiel des Funknetzwerks gezeigt. Jeder einzelne Senderknoten S11 bis S43 des Funknetzwerkes ist ausgebildet, Nachrichten zu senden. Ein Nachrichtenempfang ist an einem Senderknoten S11 bis S43 in diesem Ausführungsbeispiel nicht vorgesehen.

Jeder einzelne Senderknoten S11 bis S43 ist dem zufolge für eine unidirektionale Funkkommunikation ausgebildet. Jeder einzelne Vermittlungsknoten V11 bis V43 ist für eine bidirektionale Funkkommunikation ausgebildet und bildet gleichzeitig einen Empfängerknoten.

Die Darstellung, im Besonderen die Bezeichnung, beziehungsweise die Nummerierung der einzelnen Netzwerkkomponenten ist zu Verbesserung der Übersichtlichkeit spaltenweise angelegt. Dabei umfasst die erste Spalte, links in der Darstellung, die Senderknoten S11, S12 und S13. Die zweite Spalte der Darstellung umfasst vier Vermittlungsknoten, V11, V21, V31, und V41. Die dritte Spalte der Darstellung umfasst drei Senderknoten, S21, S22 und S23. Die vierte Spalte der Darstellung umfasst vier Vermittlungsknoten, V12, V22, V32 und V42. Die fünfte Spalte der Darstellung umfasst drei Senderknoten, S31, S32 und S33. Die sechste Spalte der Darstellung umfasst vier Vermittlungsknoten, V13, V23, V33 und V43. Die siebte Spalte schließt die Darstellung und umfasst drei Senderknoten, namentlich die Senderknoten S41, S42 und S43.

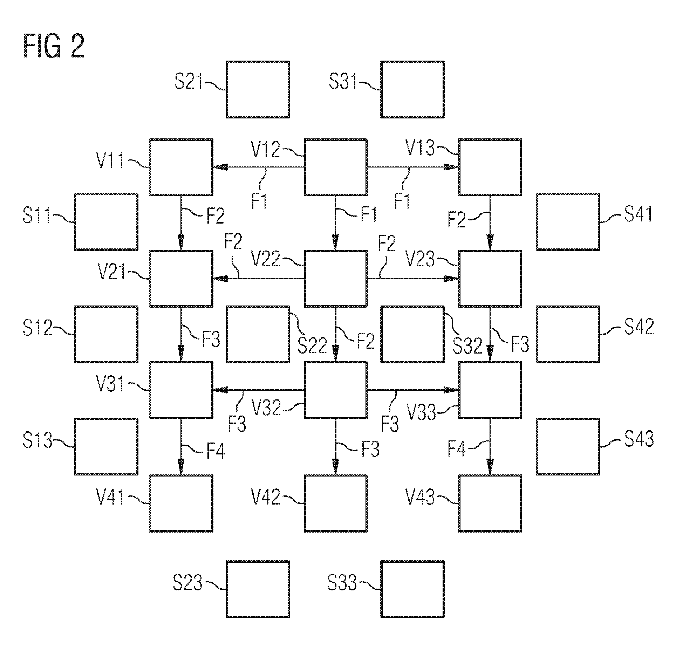

Die Figur 2 zeigt am Beispiel des in der Figur 1 schematisch dargestellten Funknetzwerkes die Ausbreitung einer Funknachricht gemäß einer Baumstruktur ausgehend von einem Empfänger- beziehungsweise einem Vermittlungsknoten über das gesamte Funknetzwerk. Die Ausbreitung beginnt mit einem ersten Vermittlungsschritt F1 im Vermittlungsknoten V12. Der Vermittlungsknoten V12 bildet dem zufolge den Stamm der Baumstruktur. Die zum Vermittlungsknoten V12 benachbarten Vermittlungsknoten V11, V13 und V22 befinden sich innerhalb der Sendereichweite des Vermittlungsknotens V12 und empfangen somit eine von dem Vermittlungsknoten V12 gesendete Funknachricht. Jeder der Vermittlungsknoten V11, V22 und V13 sendet die Funknachricht nach dessen Empfang ebenfalls. So wird die Funknachricht in einem zweiten Vermittlungsschritt F2 an weitere Vermittlungsknoten V21, V32 und V23 vermittelt. Der eben beschriebene Vorgang wiederholt sich mit einem dritten Vermittlungsschritt F3 und schließlich einem vierten Vermittlungsschritt F4 so lange, bis alle Vermittlungsknoten V11 bis V43 des Funknetzwerkes die Funknachricht zumindest einmal empfangen haben.

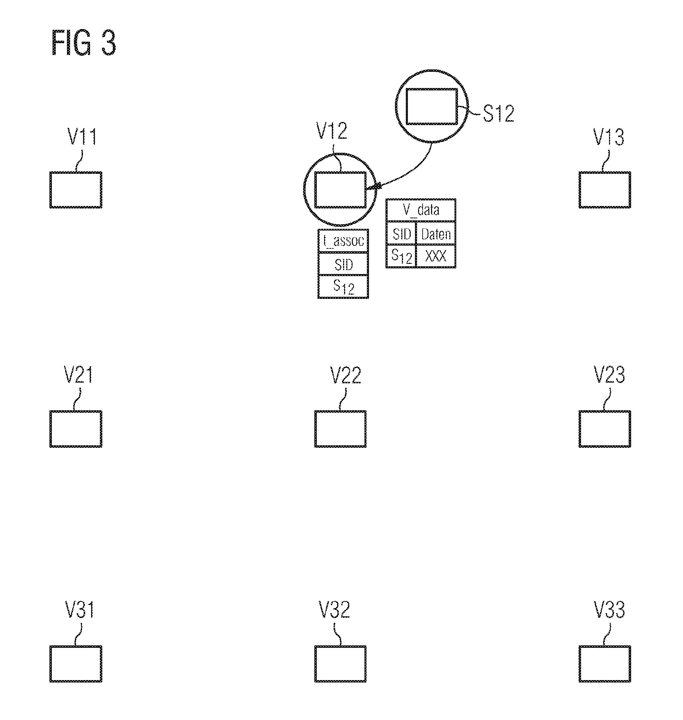

Das Initialisierungsverfahren des Funknetzwerkes beginnt mit einem in Figur 3 dargestellten ersten Schritt. In diesem ersten Schritt ist in der unmittelbaren Umgebung eines Zielknotens, hier des Vermittlungsknotens V12, der Senderknoten S12 angeordnet. Am Zielknoten V12 wird ein Initialisierungszustand eingeleitet. Am Senderknoten S12 wird eine Funknachricht gesendet. Das Senden der Funknachricht erfolgt im Ausführungsbeispiel nach einer Betätigung eines dazu vorgesehenen Tastschalters, welcher in der Figur nicht dargestellt ist. Die Funknachricht wird von dem Vermittlungsknoten V12 empfangen und gemäß der oben beschriebenen Baumstruktur im Funknetzwerk weiter vermittelt.

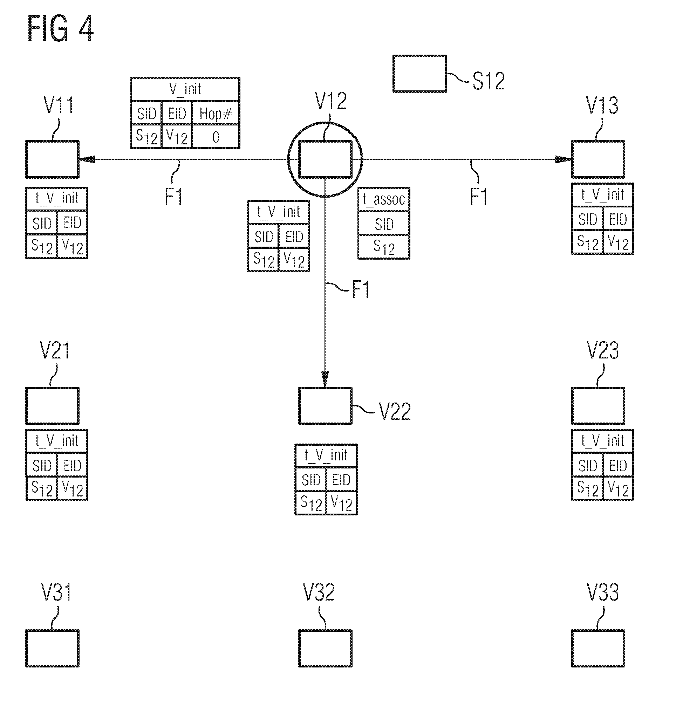

In der Praxis ist die Funkreichweite eines jeden einzelnen Vermittlungsknotens begrenzt. In der schematischen Darstellung der Figur 4 reicht die Reichweite des Zielknotens V12 bis zu seinem unmittelbar benachbarten Vermittlungsknoten V11, V22 und V13. Somit erreicht die vom Zielknoten V12 ausgehende Funknachricht die Vermittlungsknoten V11, V22 und V13.

Auch diese Vermittlungsknoten verfügen über eine begrenzte Reichweite, und senden die empfangene Funknachricht wiederum an die zu ihnen benachbarten Vermittlungsknoten weiter. Am Beispiel des Vermittlungsknotens V12 ist dies in Figur 4 dargestellt. Die Reichweite des Vermittlungsknotens V12 reicht aus, um die Funknachricht zu den Vermittlungsknoten V11, V22 und V13 zu senden.

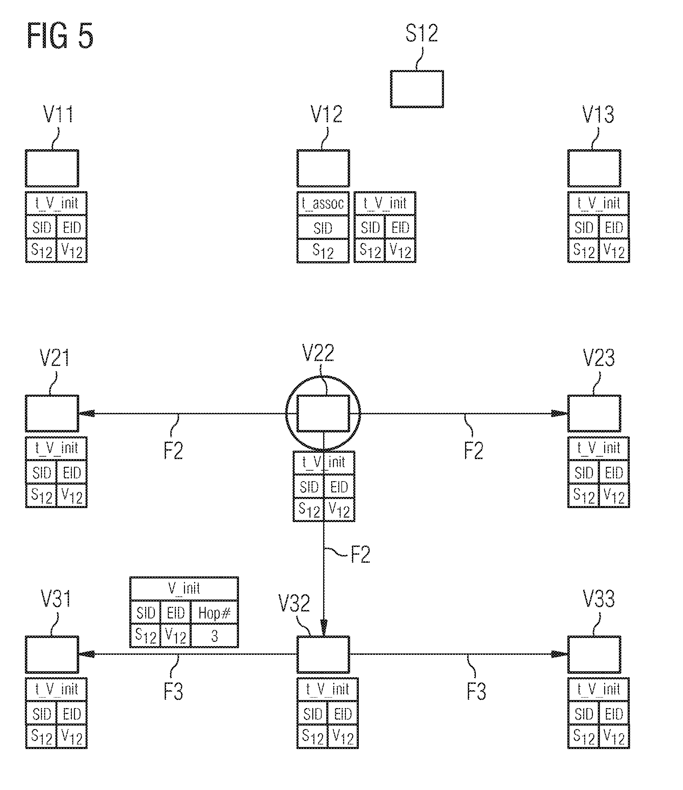

Somit sind in einem ersten Vermittlungsschritt F1, dargestellt in Figur 4, die Vermittlungsknoten V11, V22, V13 erreichbar und bereits mit einem zweiten Vermittlungsschritt F2, dargestellt in Figur 5, die Vermittlungsknoten V21, V32 und V23 erreichbar. Mit einem dritten Vermittlungsschritt F3 sind auch die Vermittlungsknoten V31, V33 und V42 erreichbar. Die Anmeldeinformation wird somit baumartig an alle Vermittlungsknoten verteilt.

Die Figur 3 zeigt einen Ausschnitt des in Figur 1 und 2 schematisch dargestellten Funknetzwerkes. In unmittelbarer Umgebung des Vermittlungsknotens V12 ist der Sendeknoten S12 zur Übermittlung der Anmeldeinformation angeordnet. Das Übermitteln der Anmeldeinformation an den Vermittlungsknoten V12 ausgehend vom Sendeknoten S12 erfolgt mit einer verminderten Sendeleistung, sodass die Reichweite der gesendeten Funknachricht derart begrenzt ist, dass lediglich die Vermittlungsknoten, die sich in der unmittelbaren Umgebung des Sendeknotens S12 befinden, diese empfangen können.

Zum Auslösen der Übermittlung der Anmeldeinformation ist am Senderknoten S12 eine Auslösevorrichtung, zum Beispiel ein Kontaktschalter, angeordnet, nach dessen Betätigung die Anmeldeinformation vom Sendeknoten S12 abgesendet wird. Die Anmeldeinformation umfasst zumindest eine Senderidentifikation SID des Senderknotens S12. Diese wird am Vermittlungsknoten V12 empfangen und gespeichert. Mit diesem Vorgang wird die Anmeldeinformation an den Vermittlungsknoten übermittelt. Der Vermittlungsknoten V12 ist damit dem Senderknoten S12 zugeordnet und ist damit Zielknoten für Funknachrichten des Senderknotens S12. Weiter ist mit dem Empfang der Anmeldeinformation das Initialisierungsverfahren des Funknetzwerkes eingeleitet.

Die Figur 4 zeigt Details der Anmeldeinformation und einer im Zusammenwirken mit dem Vermittlungsknoten V12 gebildeten Zuordnungsinformation. Die Zuordnungsinformation umfasst die Senderidentifikationsnummer SID und eine Empfängeridentifikationsnummer EID. Die jeweiligen Identifikationsnummern SID beziehungsweise EID sind im dargestellten Ausführungsbeispiel, zugunsten der Übersichtlichkeit, dem für den Senderknoten oder Vermittlungsknoten verwendeten Bezugszeichen gleichgesetzt. Jeder einzelne Vermittlungsknoten V11, V12 und V22 der diese Information empfängt, speichert diese in einem Speicher ab.

Die Figur 5 zeigt, am Beispiel des Vermittlungsknotens V22, in welcher Weise die Funknachricht wiederum an weitere Vermittlungsknoten weiter getragen wird. Die eben genannten weiteren Vermittlungsknoten sind solche, die durch den ersten Vermittlungsschritt F1 aufgrund ihrer Entfernung zum Zielknoten V12 nicht erreicht werden konnten. So vermittelt der Vermittlungskonten V22 die Zuordnungsinformation an die Vermittlungsknoten V21, V32 und V23 weiter, wobei aber auch der vorhergehende Vermittlungsknoten V12 dieses Funknachricht empfängt. Am Vermittlungsknoten V12 wird die Funknachricht mit gespeicherten Informationen verglichen, wobei bei einer Übereinstimmung mit der zuvor gesendeten Nachricht die nun empfangene Funknachricht entweder verworfen oder gemäß einer Empfangsbestätigung verwertet und anschließend verworfen wird.

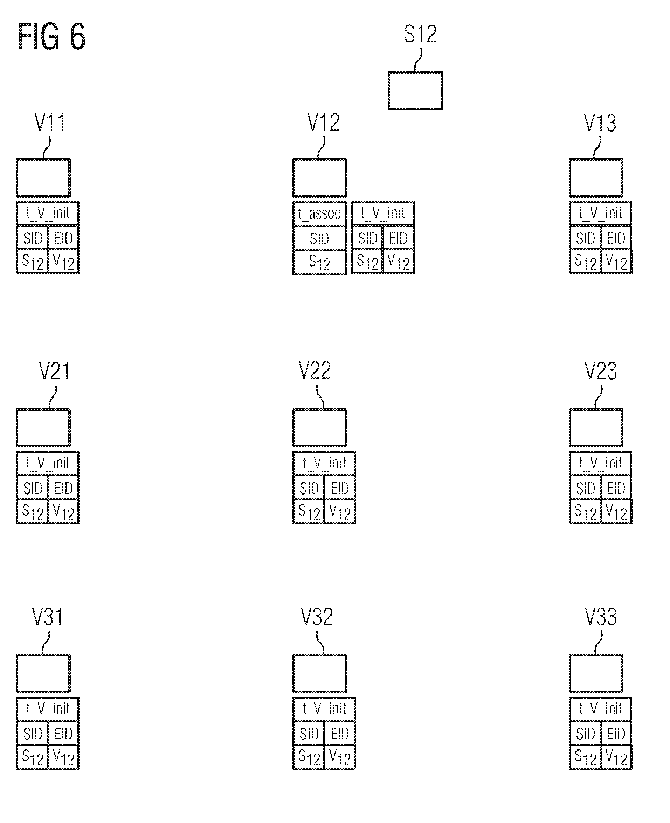

Die Figur 6 zeigt den Zustand im Funknetzwerk nach dem zweiten Funkschritt. Jeder der bislang beteiligten Vermittlungsknoten V11 bis V33 hat nun die Zuordnungsinformation des Senderknotens S12 zum Vermittlungsknoten V12 und damit zum Empfängerknoten V12 gespeichert. Die Speicherung der Zuordnungsinformatio erfolgt durch die Speicherung der Senderidentifikation SID und durch die Speicherung der Empfängeridentifikation EID in einem Speicher.

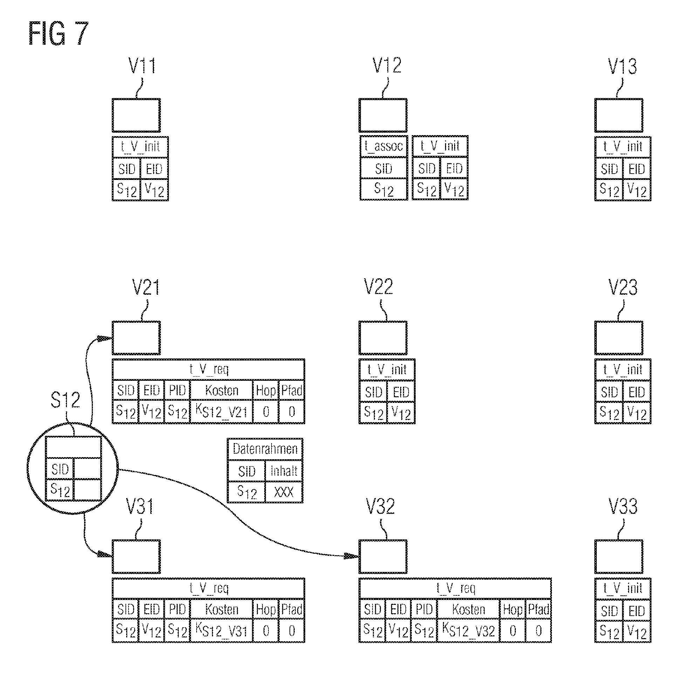

Figur 7 zeigt einen weiteren Schritt des Initialisierungsverfahrens des Funknetzwerkes bei dem der Senderknoten S12 nun an seinen Bestimmungsort verbracht ist. An dem Bestimmungsort erfolgt das Senden einer Funknachricht die zumindest die Senderidentifikation SID des Senders S12 umfasst. Diese Funknachricht wird von den unmittelbar benachbarten Vermittlungsknoten V21, V31 und V32 empfangen.

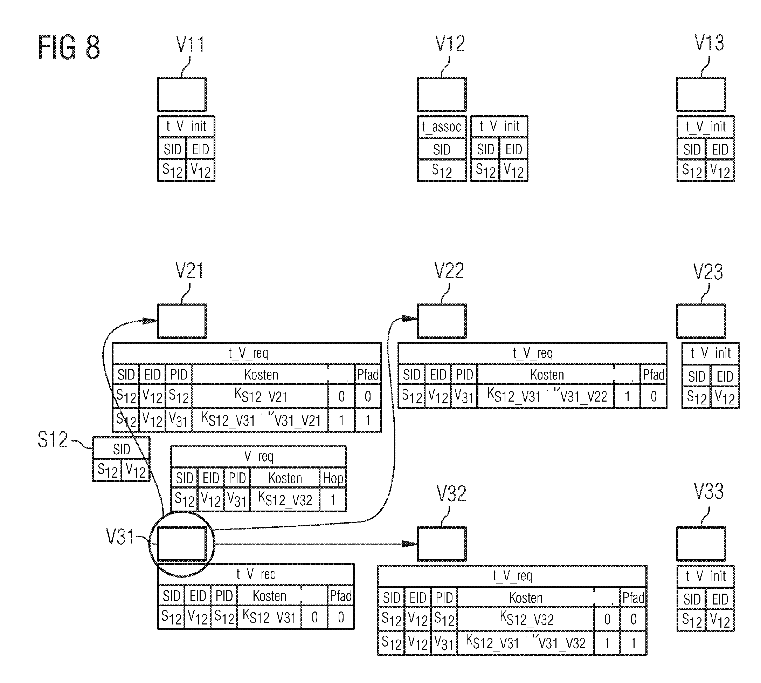

An jedem der Vermittlungsknoten V21, V31 und V32, welcher diese Funknachricht empfängt wird geprüft, ob zu der empfangenen Senderidentifikation SID eine Empfängeridentifikation EID zugeordnet ist. Findet sich eine Zuordnung, so wird diese Zuordnung an dem entsprechenden Vermittlungsknoten V21, V31 oder V32 erkannt und die Funknachricht mit der jeweiligen Vermittlungskotenidentifikation erweitert und versendet. Dies ist in Figur 8 am Beispiel des Vermittlungsknotens V31 gezeigt. Der Vermittlungsknoten V31 vermittelt die vom Senderknoten S12 empfangene Information und Zuordnung zum Empfängerknoten V12 an die zu ihm benachbarten Vermittlungsknoten V21, V22 und V23 weiter. Die Vermittlungsknoten V21 und V32 empfangen die vom Senderknoten S12 abgesendete Funknachricht ein zweites Mal. Auch dieses Ereignis wird, wie in Figur 8 gezeigt in den jeweiligen Speichern der Vermittlungsknoten V21 und V32 abgelegt. Zudem erfolgt auch eine Speicherung der Vermittlungsknotenidentifikation PID des vorhergehenden Vermittlungsknoten. Dies ist gezeigt in der zu dem Vermittlungsknoten V21 und V32 zugeordneten tabellarischen Darstellung. Dort ist zum Einen die Zuordnungsinformation des ersten Empfangs direkt vom Senderknoten S12 und zum Anderen die gleiche Zuordnungsinformation, welche über den Vermittlungsknoten V31 zu den Vermittlungsknoten V21 oder V32 gelangt ist, in die Tabelle eingetragen.

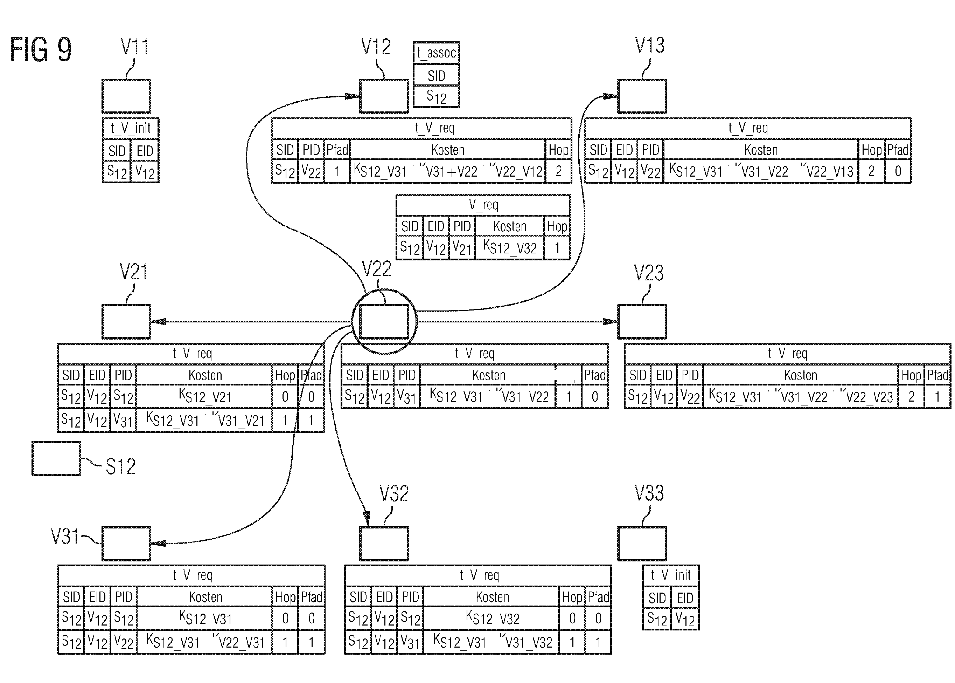

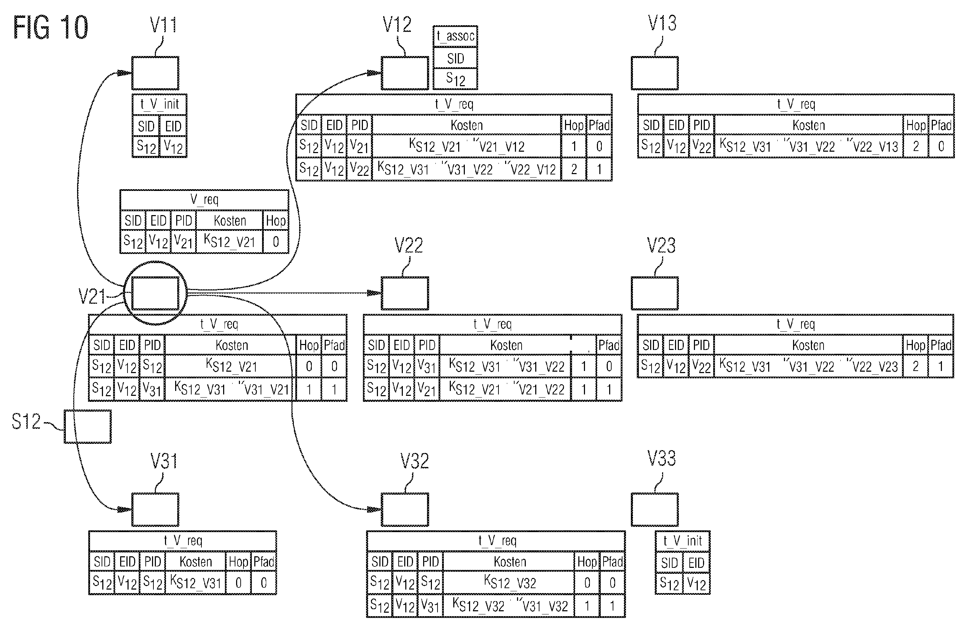

Figur 9 zeigt den weiteren Vermittlungsvorgang ausgehend vom Vermittlungsknoten V22 aus. Dabei erfolgt nunmehr eine Vermittlung der Funknachricht an die Vermittlungsknoten V12, V13, V21, V23, V32 und V31. In den jeweiligen Vermittlungsknoten wird sowohl die Information bezüglich der Zuordnung des Senderknotens und des Empfängerknotens gespeichert, als auch der Weg über welche Vermittlungsknoten die Nachricht vermittelt wurde. Somit ist in jedem Knoten die Zuordnung der Senderidentifikation zur Empfängeridentifikation mit den jeweiligen Übermittlungspfaden, die die Zuordnungsinformation genommen hat, abgelegt. Erreicht die Zuordnungsinformation, wie in Figur 9 gezeigt, den Vermittlungsknoten V12, welcher als Empfängerknoten beziehungsweise Zielknoten dem Senderknoten S12 zugeordnet ist, so erfolgt auch hier eine Speicherung der jeweiligen Vermittlungsdaten. In Figur 10 ist ein entsprechendes Verfahren für den Vermittlungsknoten V21 gezeigt.

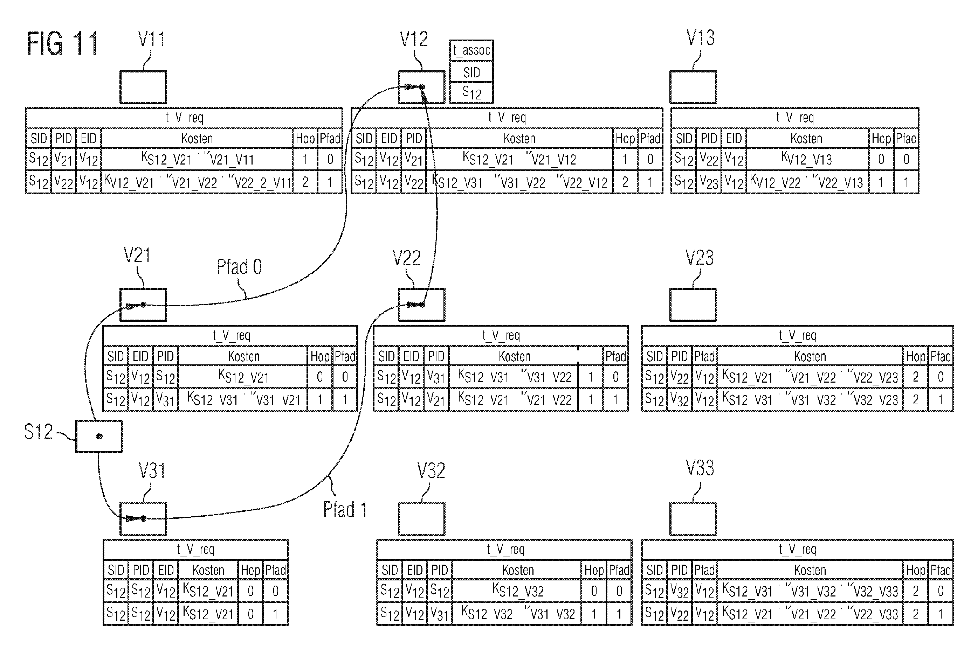

Die Figur 11 zeigt schließlich einen Zustand, in welchem sich das Funknetzwerk befindet, wenn die Funknachricht über das gesamte Funknetzwerk und die beteiligten Vermittlungsknoten V11 bis V33 übermittelt wurde. Jeder der beteiligten Vermittlungsknoten V11 bis V33 und damit auch der Zielknoten V12 verfügen über Vermittlungsdaten, eine Information dazu, welchen Weg die jeweilige Zuordnungsinformation bis zum Empfang durch den betreffenden Vermittlungsknoten genommen hat. Die in der Darstellung dem Vermittlungsknoten V12 zugeordnete Tabelle gibt in der Darstellung den wesentlichen Speicherinhalt des Speichers am Zielknoten V12 wieder. Dem zufolge ist die Funknachricht über den Pfad 0 und den Pfad 1 zu dem Vermittlungsknoten V12 gelangt. Der Pfad 0 ist beschrieben, ausgehend von dem Senderknoten S12 über den Vermittlungsknoten V21 zum Vermittlungsknoten V12, wobei der Pfad 0 einen Vermittlungsknoten zwischen Zielknoten und Senderknoten umfasst. Der Pfad 1 ist gebildet aus dem Senderknoten S12 und den Vermittlungsknoten V31, V22 und V12 wobei dieser Pfad über zwei Vermittlungsknoten V31 und V22 zwischen Senderknoten S12 und Zielknoten V12 gebildet ist. Über die Vermittlungspfade Pfad 0 und Pfad 1 sind die ersten Funknachrichten am Zielknoten eingegangen. Diese sind nun als bevorzugte Vermittlungspfade bestimmt.

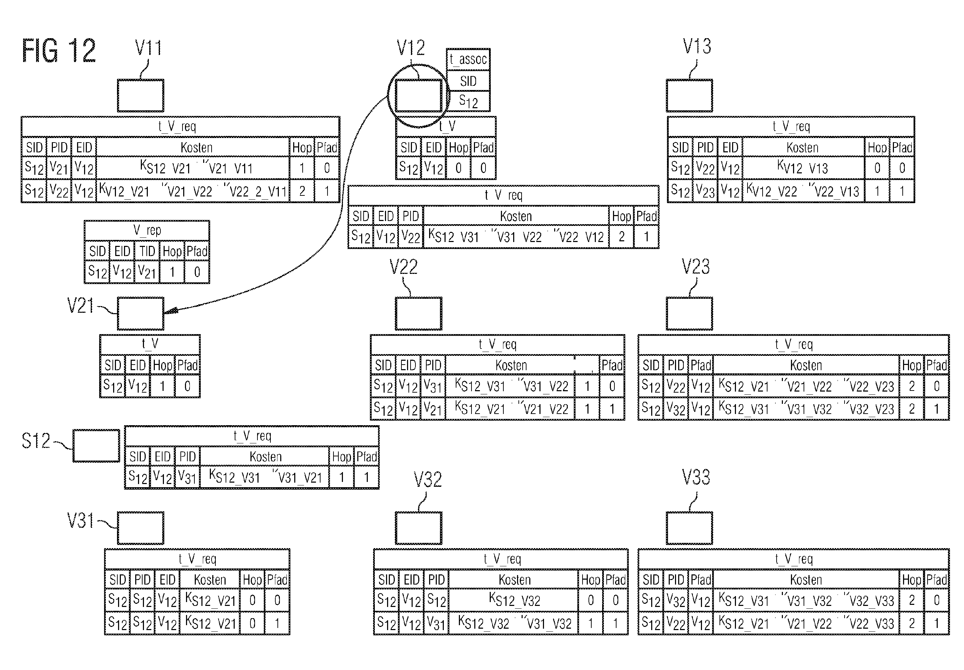

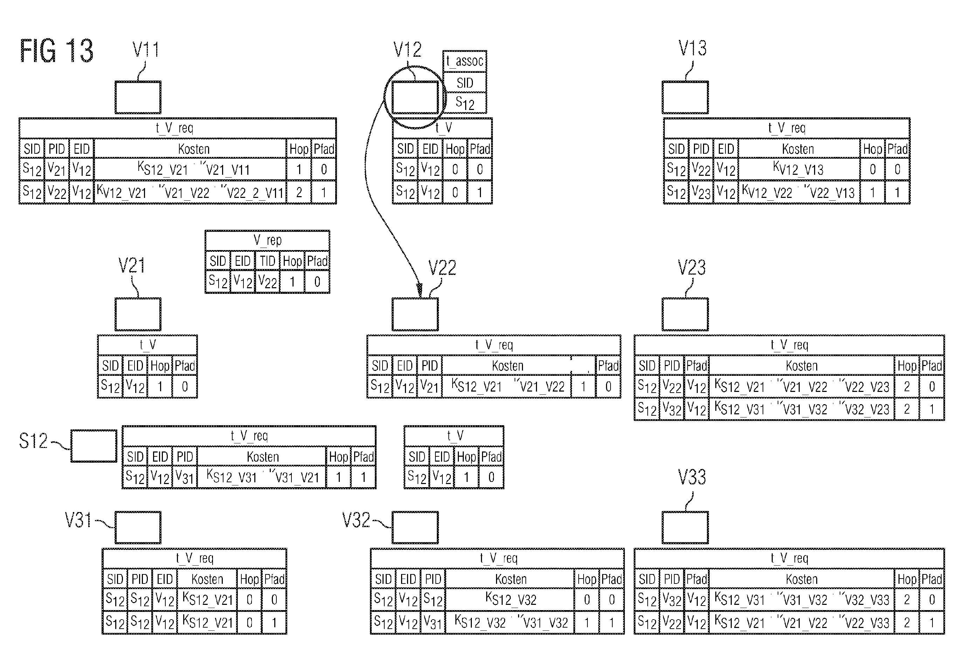

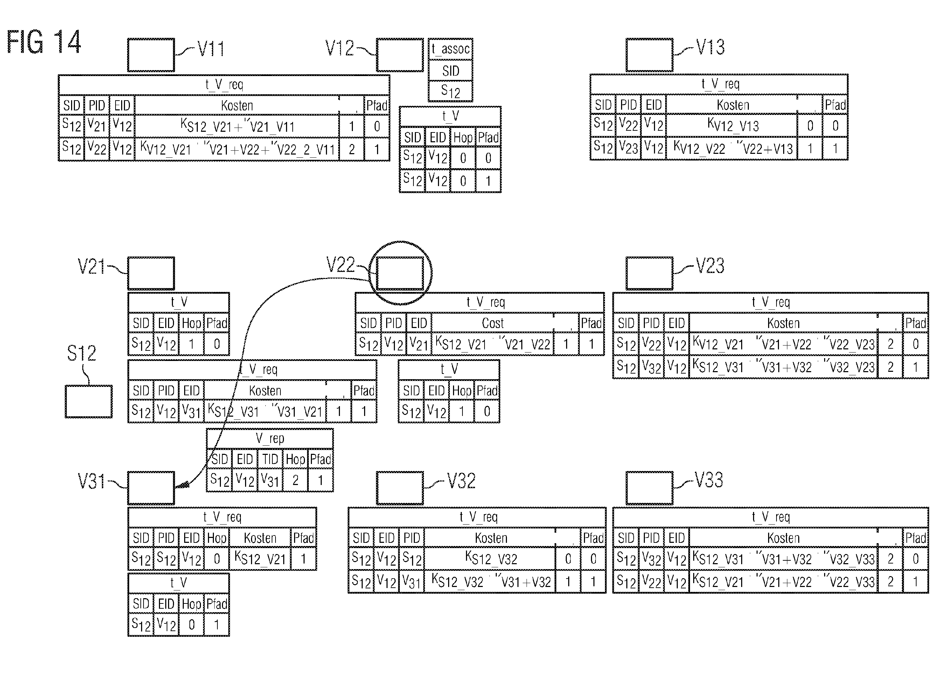

Figur 12 zeigt nun die Vermittlungsantwort seitens des Zielknotens V12. Mittels dieser Antwort erfolgt die Einleitung eines abschließenden Schrittes des Initialisierungsverfahrens. Dabei wird an den bevorzugten Vermittlungspfaden rückverfolgend jedem beteiligten Vermittlungsknoten V21 und V22 ein Signal übermittelt mit welchem das Ende des Initialisierungsverfahrens signalisiert wird, wodurch an den am bevorzugten Vermittlungspfaden beteiligten Vermittlungsknoten V21 und V22 ein Wechsel von dem Initialisierungszustand in einen Betriebszustand erfolgt. Dies zeigen die Figuren 13 und 14. Figur 14 zeigt die Weiterleitung dieses Signals vom Vermittlungsknoten V22 zum Vermittlungsknoten V31. Nach der erfolgten Übermittlung sind alle an den beiden Übermittlungspfaden beteiligten Vermittlungsknoten V21, V22 und V31 in den Betriebszustand gewechselt.

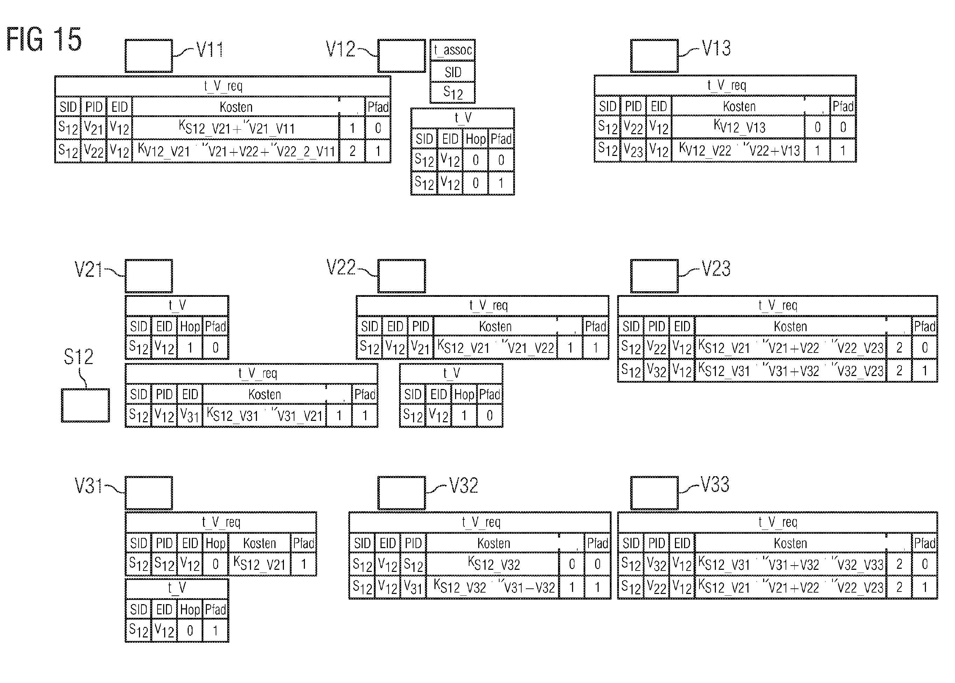

Die Figur 15 zeigt den Zustand des Funknetzwerkes am Ende dieses Signals. Jeder einzelne am Übermittlungspfad beteiligte Vermittlungsknoten V21, V22, V31 speichert die Information über den Übermittlungspfad ab.

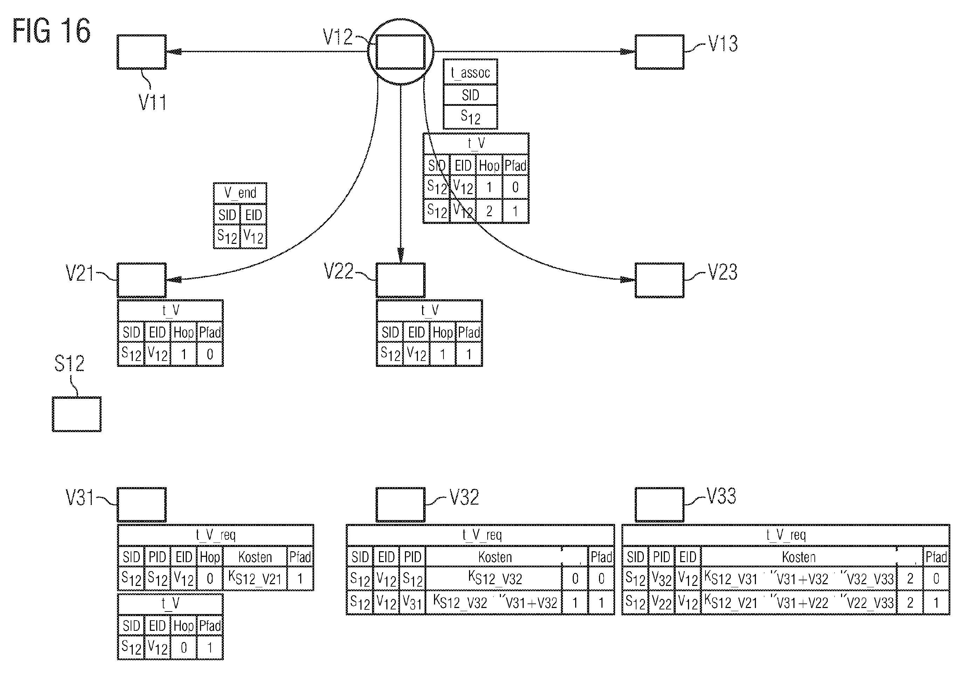

Abschließend erfolgt der letzte Schritt des Initialisierungsverfahrens im Ausführungsbeispiel dargestellt in Figur 16, bei dem allen Vermittlungsknoten des Netzwerkes das Ende des Initialisierungsverfahrens übermittelt wird, ausgehend vom Vermittlungsknoten V12, dem Zielknoten. Dies bewirkt bei den einzelnen Vermittlungsknoten, welche nicht an dem Vermittlungspfad Pfad 0 oder Pfad 1 beteiligt sind, ein Löschen sämtlicher Initialisierungs- und Zuordnungsinformationen, die sie seit Beginn des Initialisierungsverfahrens gespeichert haben. Lediglich die am Vermittlungspfad beteiligten Vermittlungsknoten V12, V22 und V31 halten die Information des Vermittlungspfades am Ende des Initialisierungsverfahrens permanent gespeichert.

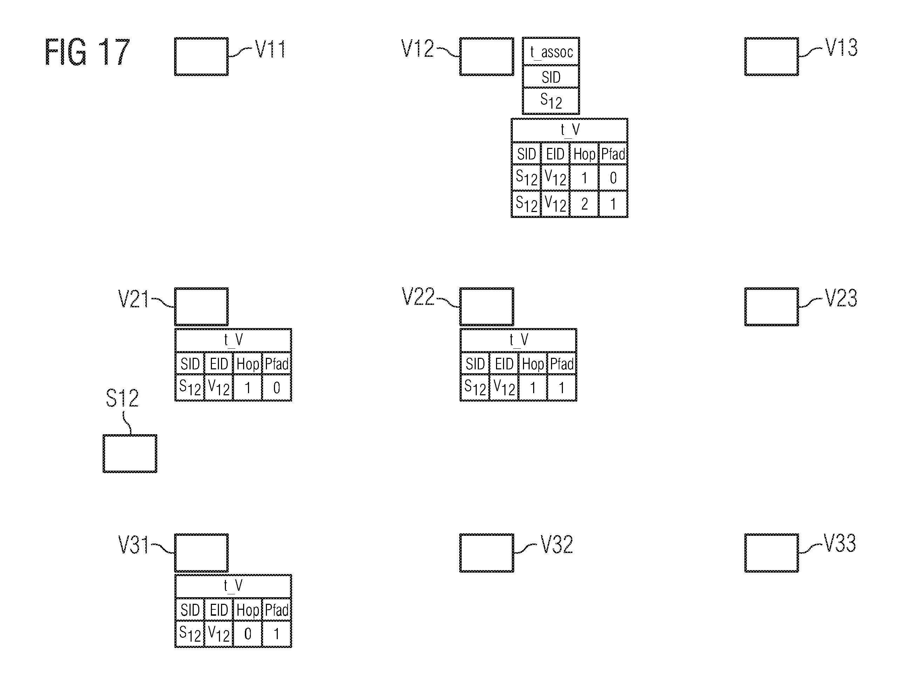

Am Ende des Initialisierungsverfahrens ist der in Figur 17 gezeigte Zustand erreicht, bei dem sämtliche Vermittlungsknoten, die am Vermittlungspfad Pfad 0 oder Vermittlungspfad Pfad 1 beteiligt sind, die Zuordnungsinformation der Sender ID zur Empfänger ID aufweisen und abgespeichert haben und zudem auch noch die Pfadinformation der Übermittlungspfade gespeichert haben. Alle anderen Vermittlungsknoten des Funknetzwerkes haben diese Informationen gelöscht.

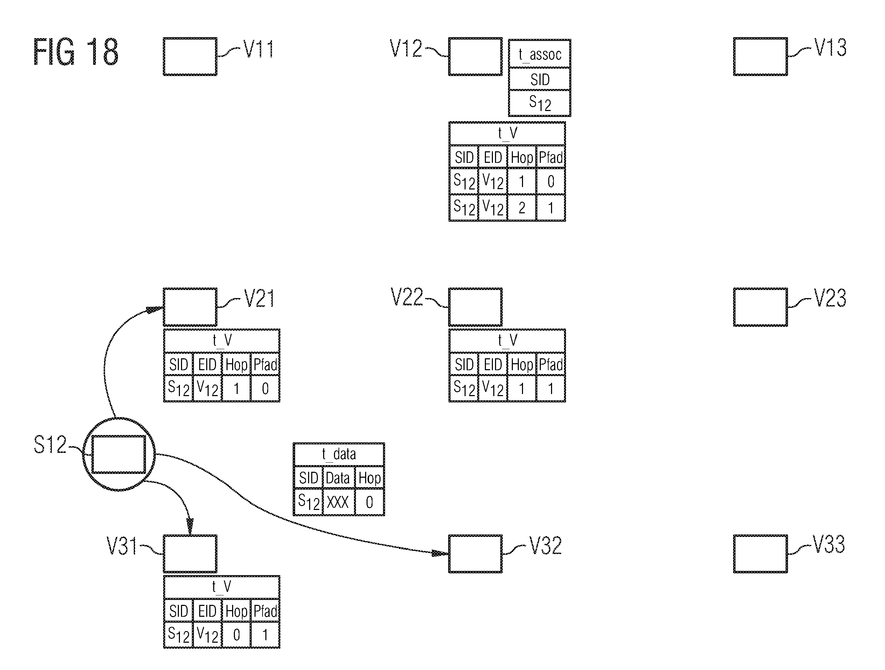

Figur 18 zeigt das Senden einer Funknachricht vom Sendeknoten S12 nach dem Initialisierungsverfahren des Funknetzwerkes, wobei wiederum die Vermittlungsknoten V21, V31 und V32 die Funknachricht empfangen. Aufgrund des vorstehend beschriebenen Initialisierungsverfahrens ist lediglich in den Vermittlungsknoten V21 und V31 eine Zuordnung des Senderknotens S12 zum Vermittlungsknoten und Zielknoten V12 gespeichert. Am Vermittlungsknoten V32 ist diese Zuordnung nicht gespeichert, so dass der Vermittlungsknoten V32 zur Weiterleitung der Nachricht nicht veranlasst ist. Die Weiterleitung der Nachricht erfolgt über den im Initialisierungsverfahren festgelegten Pfad 0 oder Pfad 1. Alle im Funknetzwerk angeordneten Vermittlungsknoten befinden sich in einem Ruhezustand geringsten Energieverbrauchs, aus dem diese mittels eines Empfang eines Wecksignales oder der Senderidentifikation SID des zugeordneten Senderknotens S12 in einen Betriebsmodus versetzt werden und eine Weiterleitung der Nachricht durch Senden erfolgt.

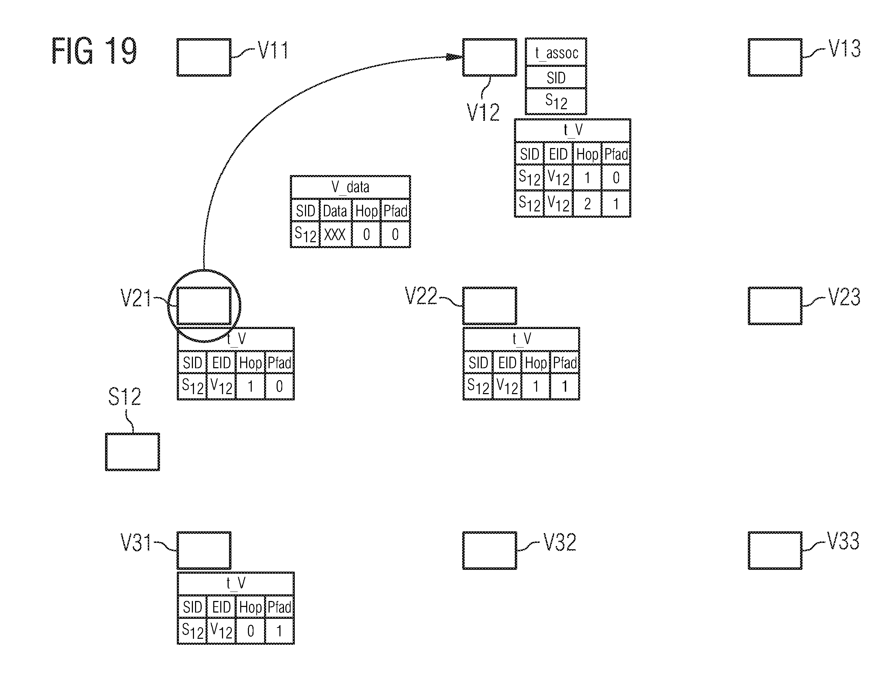

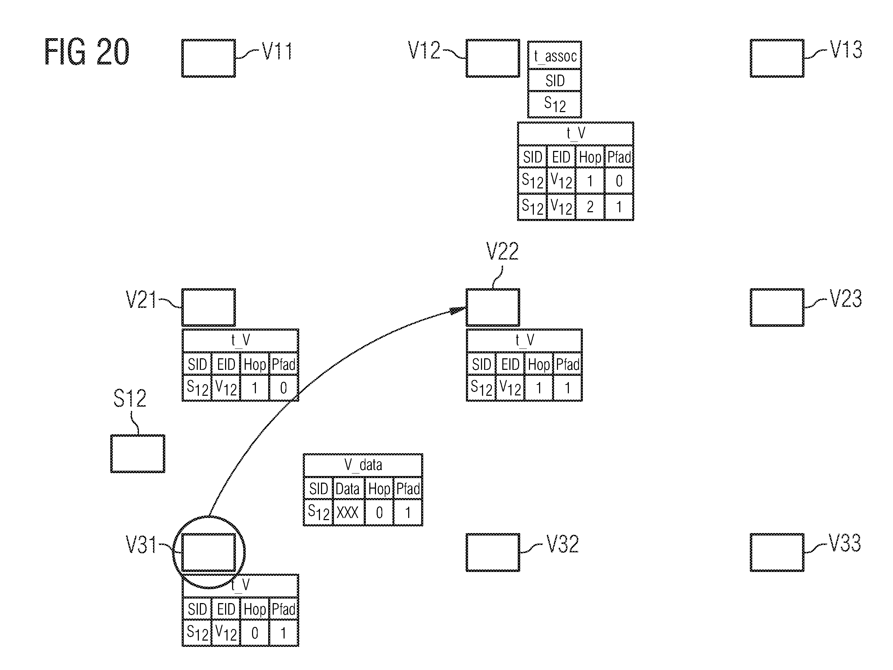

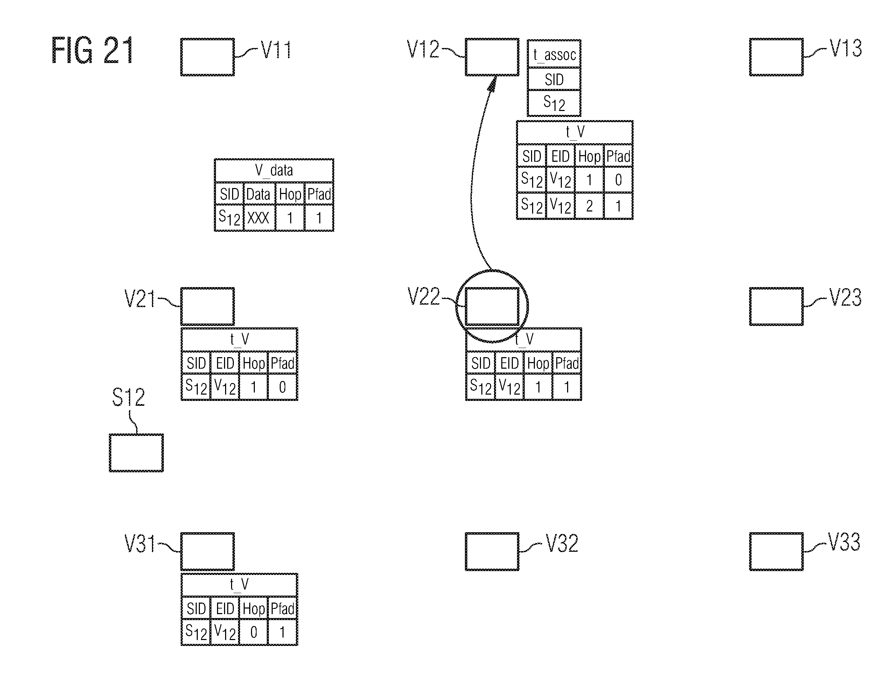

Das heißt, wie in Figur 19 gezeigt, wird die Nachricht vom Vermittlungsknoten V21 an den Vermittlungsknoten und Zielknoten V12 weitergeleitet, gemäß der in dessen Speicher gespeicherten Vermittlungsinformation und Zuordnungsinformation. Gleiches geschieht, wie in Figur 20 gezeigt, am Vermittlungsknoten V31, der diese Information an den Vermittlungsknoten V22 weiterleitet. Der Vermittlungsknoten V22 leitet, gezeigt in Figur 21 die Information an den Vermittlungsknoten V12 und damit an den Zielknoten weiter.

Somit hat über einen festgelegten Pfad 0 und Pfad 1 die Information ausgehend von dem Senderknoten S12 den Zielknoten V12 erreicht. Durch die im Initialisierungsverfahren vorbestimmbaren Übermittlungspfade sind Bestätigungen der Übermittlung zurück an den Sender des Signals oder an einen vorhergehenden Vermittlungsknoten nicht zwingend erforderlich, sodass dort eine große Menge an Sendeenergie eingespart werden kann. Das Absenden und Weiterleiten einer jeglichen Information von einem ersten Vermittlungsknoten zu einem weiteren Vermittlungsknoten und dann wiederum das Weiterleiten an den weiteren Vermittlungsknoten kann gemäß einer bevorzugten Ausführungsform des Verfahrens vom vorhergehenden Vermittlungsknoten als Sendebestätigung und Empfangsbestätigung der vom ihm vorab gesendeten Funknachricht ausgewertet werden. Ein zusätzliches Senden einer Empfangsbestätigung kann somit eingespart werden.

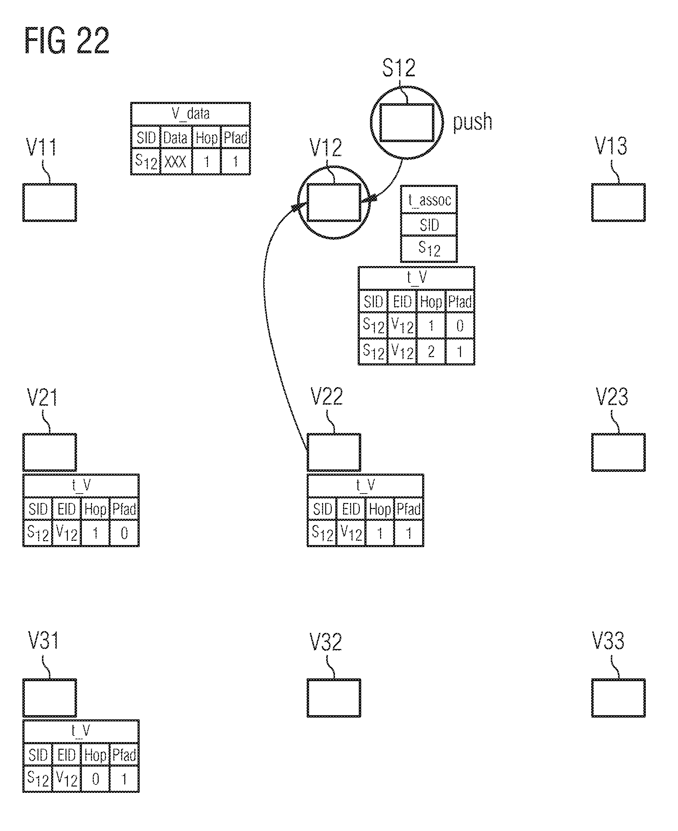

Die Figur 22 zeigt einen Löschvorgang, mit dem die durch ein Initialisierungsverfahren festgelegten Vermittlungspfade des Funknetzwerkes sowie die durch das Initialisierungsverfahren festgelegte Zuordnung des Senderknotens S12 zum Empfänger-und Zielknoten V12 aufgelöst werden. Dazu wird der Ziel- und Vermittlungsknoten V12 und der Senderknoten S12 zueinander gebracht und ein am Senderknoten S12 vorgesehener Tastschalter, der ein Löschsignal auslöst, betätigt. Nach dem Drücken des Löschknopfes wird die Zuordnung am Zielknoten V12 zum Senderknoten S12 gelöscht und an alle Vermittlungsknoten im Netzwerk weitergeleitet. Diese Löschinformation bewirkt dann ein Löschen sämtlicher Zuordnungsinformation und Vermittlungsinformation in allen an den bestimmten Vermittlungspfaden beteiligten Vermittlungsknoten.

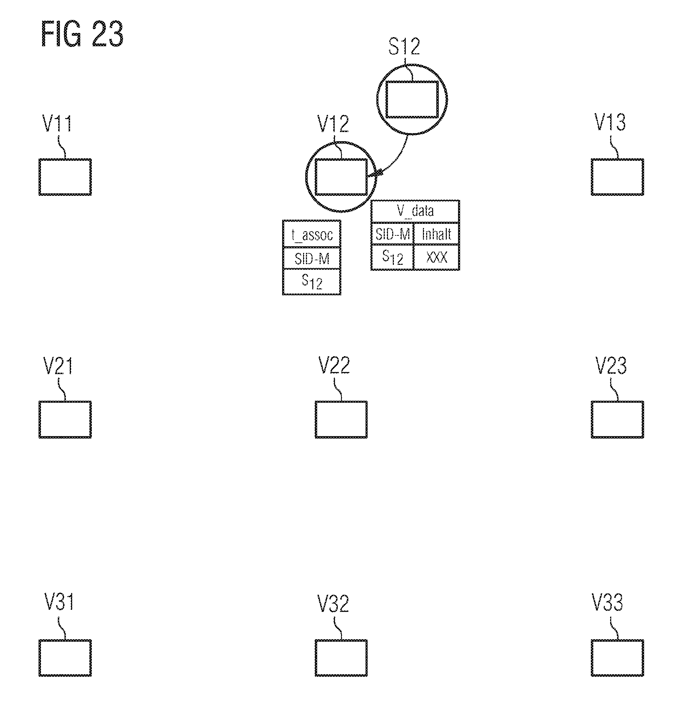

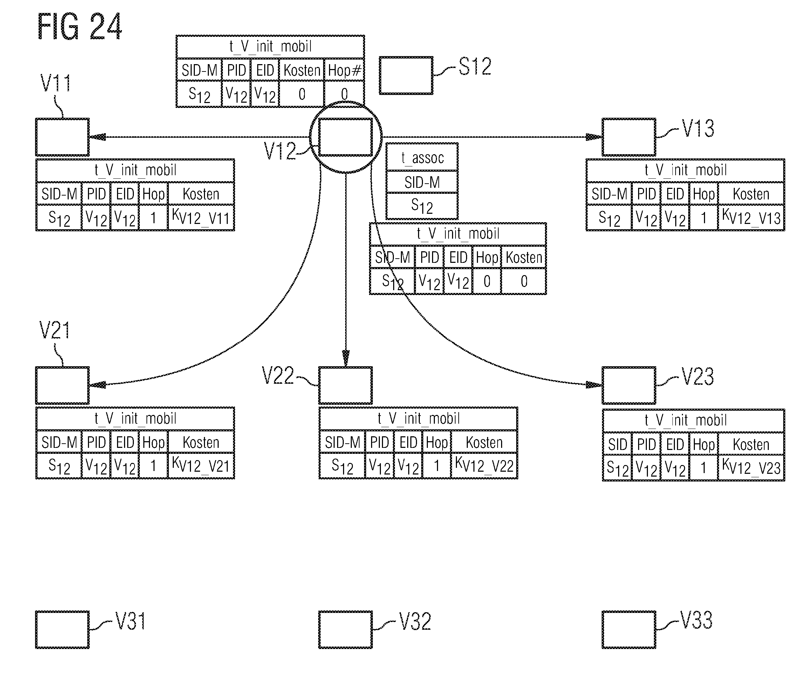

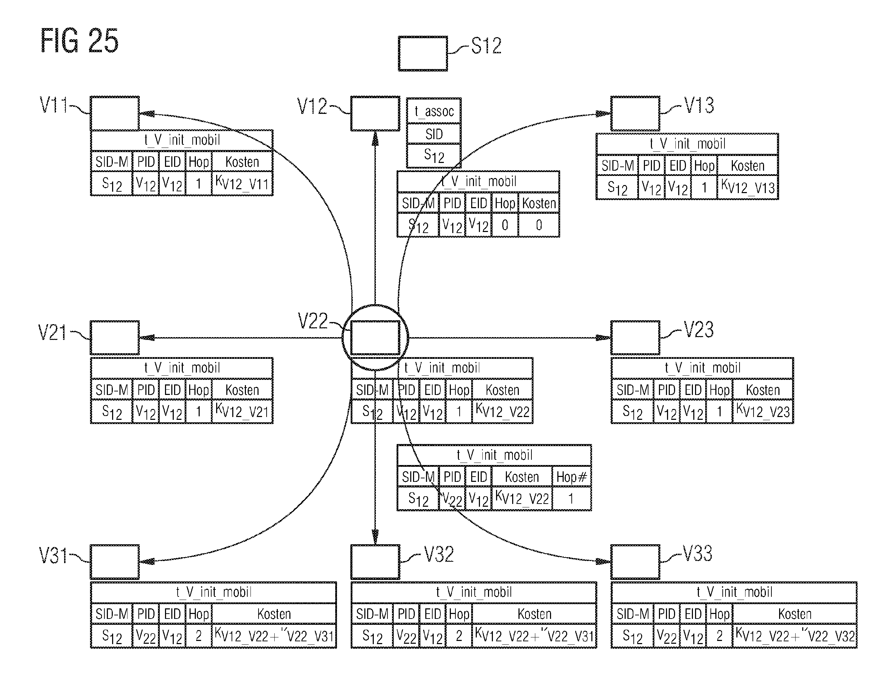

Im Folgenden ist das Initialisierungsverfahren für einen mobil einsetzbaren Senderknoten S12 beschrieben. Figur 23 zeigt den bereits vorstehend beschriebenen Vorgang des Beginns des Initialisierungsverfahrens, bei dem der Senderknoten S12 in die unmittelbare Umgebung des Vermittlungsknotens V12 gebracht wird. Am Vermittlungsknoten V12 wird durch Betätigen eines Tastschalters am Sendeknoten S12 das Einlernen "eines mobilen Senderknotens" ausgelöst, wobei der Tastschalter das Senden der Anmeldeinformation am mobilen Senderknoten auslöst. Die Anmeldeinformation umfasst die Senderidentifikation des mobilen Senderknoten SID-M. Die Anmeldeinformation des mobilen Senderknotens SID-M wird ebenfalls wie bei einem nicht mobil verwendbaren Senderknoten S12 gemäß einer Baumstruktur an alle Vermittlungsknoten V11 bis V33 im Funknetzwerk verteilt. Figur 24 zeigt einen ersten Schritt dieses Verteilens an die Vermittlungsknoten V11, V13, V21, V22 und V23. Jeder dieser Vermittlungsknoten erhält eine Information über die Zuordnung des Senderknotens zum Zielknoten V12. Am Beispiel des Vermittlungsknotens V22, gezeigt in der Figur 25, wird diese Information an alle benachbarten Vermittlungsknoten V31, V32 und V33 weitergeleitet, wobei auch die vorhergehenden Vermittlungsknoten V21, V11, V12, V13 und V23 diese Information als Empfangsbestätigung erhalten.

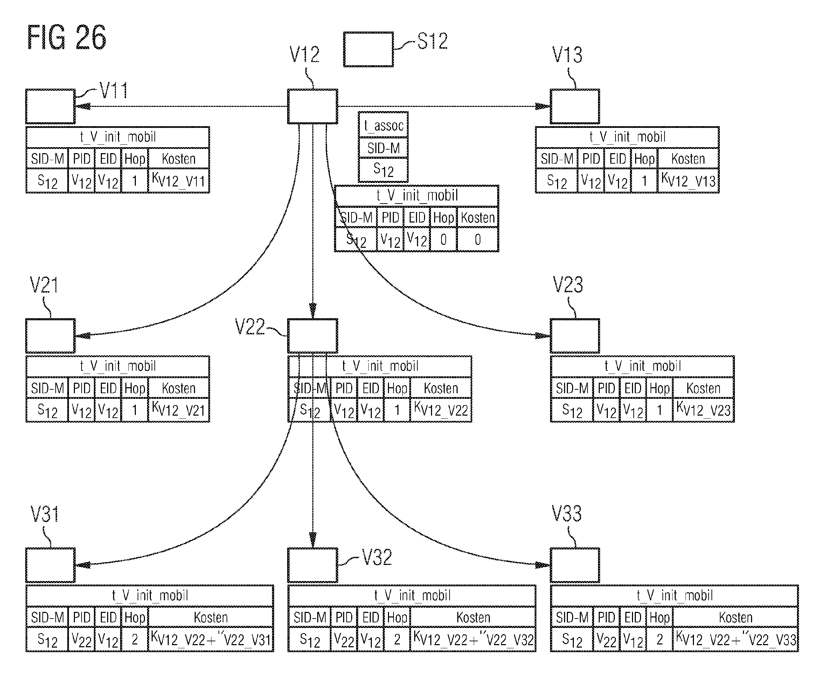

Somit ist nach zwei beispielhaften Funkschritten der in Figur 26 dargestellte Status erreicht. Jeder Vermittlungsknoten im Netzwerk hat die Vermittlungsinformation gemäß der bereits im Zusammenhang mit dem Initialisierungsverfahren mit einem nicht mobil verwendbaren Senderknoten beschriebenen baumartigen Struktur abgelegt. Die baumartige Struktur hat ihre Wurzel im Zielknoten, dem Vermittlungsknoten V12. Diese Information wird in jedem Vermittlungsknoten des Netzwerks an einem eigenen Speicherbereich des Speichers gespeichert.

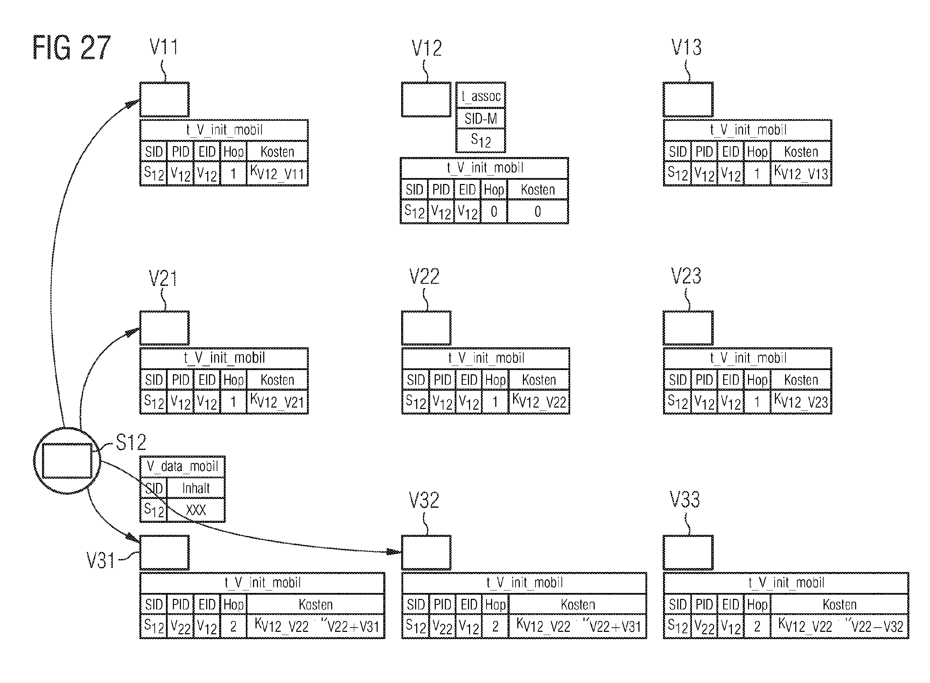

Wird nun, wie in Figur 27 gezeigt, der Senderknoten S12 mobil im Netzwerk bewegt und eine Funknachricht versendet, so empfängt zunächst jeder in der Reichweite des mobilen Senderknotens V12 befindliche Vermittlungsknoten V11, V21, V31 und V32 diese Nachricht und vermittelt sie entlang der Baumstruktur im Funknetzwerk bis zu dem Zielknoten V12 weiter. Erhalten nun vier Vermittlungsknoten diese Information, so übermitteln diese vier Vermittlungsknoten - jeder für sich anhand der in Figur 26 gezeigten Baumstruktur - die Information an den Zielknoten V12 weiter. Das heißt, mobile Senderknoten in dem Funknetzwerk bewirken einen hohen Funkverkehr. Aus dem Grunde ist es vorteilhaft die Anzahl der mobilen Senderknoten im Funknetzwerk auf ein sinnvolles Maß beziehungsweise auf eine sinnvolle Anzahl zu begrenzen.

In nicht dargestellten Ausführungsformen des Funknetzwerks kann ein Vermittlungs- oder Empfängerknoten eine Bestätigung, beispielsweise in Form eines Bestätigungssignals gemäß dem vorgenannten Kommunikationsverfahren, an den entsprechenden Senderknoten versenden. Das Bestätigungssignal kann dabei ein reines Acknowledge-Signal oder ein mit einer Rückinformation kombiniertes Acknowledge-Signal sein. Eine Rückinformation besteht dabei beispielsweise aus Einstellungen von Parameterwerten, die in einem Gerät am Senderknoten vorgenommen werden sollen. Das Kommunikationsverfahren kann alternativ oder in Zusammenhang mit den dargestellten Initialisierungs- und Betriebsverfahren durchgeführt werden. Ein Kommunikationsverfahren der genannten Art ist beispielsweise bei der Übermittlung von Sensorwerten zwischen einem Sensor als Senderknoten und einem Steuermodul als Empfängerknoten sinnvoll. Ein Vermittlungsknoten fungiert dabei als Repeater, der das gesendete Signal derart verstärkt, dass es über größere Distanzen vom Senderknoten an den Empfängerknoten übermittelt werden kann. Falls der Senderknoten energieautark arbeitet, so ist es erstrebenswert, dass der Senderknoten möglichst wenig Energie verbraucht. Vorteilhafterweise fragt der Senderknoten ein Bestätigungssignal daher nur in einem sehr kleinen Zeitintervall ab. Zeitverzögerungen durch einen Vermittlungsknoten als Repeater könnten dabei dadurch umgangen werden, dass der Vermittlungsknoten einen entsprechenden Zwischenspeicher für Bestätigungssignale des Empfängerknotens vorhält. Falls anschließend der Senderknoten ein Bestätigungssignal abfragt, kann dieses ihm aus dem Zwischenspeicher des nächstgelegenen Vermittlungsknotens mitgeteilt werden.

Es ist denkbar, einen derartigen Zwischenspeicher auch in einem Empfängerknoten selbst vorzusehen. Ferner könnte ein Vermittlungsknoten einem Empfängerknoten Informationen bzgl. der Sendeleistung mitteilen, sodass der Empfängerknoten entscheiden kann, welcher Knoten die Zwischenspeicherung von Bestätigungssignalen durchführt.

Weiterhin ist denkbar, eine Initialisierungsphase oder Einlernphase im Rahmen aller genannten Verfahren derart durchzuführen, dass durch Betätigen einer Taste an einem Empfangsmodul eines Empfängerknotens diese Phase gestartet und durch Betätigen einer Taste an einem Sendemodul im Senderknoten die Übermittlung einer Nachricht vom Senderknoten an den Empfängerknoten ausgelöst werden. Somit erhält ein Empfängerknoten automatisiert Informationen über den jeweiligen Senderknoten. Dies kann anschließend durch den Empfängerknoten bestätigt werden. Sende- und Empfangsfunktionen können dabei über entsprechende Mikrokontroller-Bausteine realisiert werden.

Mögliche Anwendungen aller vorgenannten Verfahrensschritte und deren Ausführungen könnten beispielsweise die Temperaturregelung durch Temperatursensoren in Zimmern von Gebäuden sein, die Sensorwerte automatisiert an eine zentrale Regelungs- und Leitkomponente übertragen. Eine weitere Anwendung ergibt sich für Häuser, in denen verschiedenste dezentrale Sensorkomponenten für Belüftungsanlagen, Jalousien, Fenstersensoren, Lichtschalter oder ähnliches in einem Funknetzwerk mit zentralen Steuerkomponenten verbunden sind und miteinander drahtlos kommunizieren.

### Bezugszeichenliste

- Vermittlungsknoten: V11, V12, V13, V21, V22, V23, V31, V32 und V33
- Senderknoten: S11, S12, S13, S21, S22, S23, S31, S32, S33, S41, S42, S43

- Erster, zweiter, dritter, vierter:
- Vermittlungsschritt: F1, F2, F3, F4

- Senderidentifikation: SID
- Senderidentifikation mobil: SID-M
- Empfängeridentifikation: EID
- Vermittlungsknotenidentifikation: PID
- Erster Vermittlungspfad: Pfad 0
- Zweiter Vermittlungspfad: Pfad 1

## Patentansprüche

1. Kommunikationsverfahren für ein Funknetzwerk mit mindestens einem Kommunikationsknoten mit beschränkten Energiereserven "E", und mindestens einem Kommunikationsknoten mit drahtgebundener Energieversorgung "D", und ggf. einem oder mehreren Vermittlungsknoten (V11 bis V33),
**dadurch gekennzeichnet, dass**
- der Kommunikationsknoten "E" zunächst eine erste Funknachricht absendet,
- der Kommunikationsknoten "E" danach in einen Strom sparenden Modus schaltet,
- der Kommunikationsknoten "E" nach Ablauf einer fixen oder veränderlichen Zeitspanne ein zweites Funksignal sendet, welches eine Rückantwort aus dem Kommunikationssystem des Kommunikationsknotens "D" und gegebenenfalls der Vermittlungsknoten (V11 bis V33) auslöst,
- die Rückantwort bereits im Kommunikationsknoten "D" oder einem der Vermittlungsknoten (V11 bis V33) zwischengespeichert wurde und
- die Rückantwort kurz nach dem Absenden des zweiten Funksignals vom Kommunikationsknoten "E" empfangen wird.

2. Kommunikationsverfahren nach Anspruch 1,
**dadurch gekennzeichnet, dass**
- zur Ersteinrichtung einer Verbindung zwischen dem Kommunikationsknoten "E" und dem Kommunikationsknoten "D" zunächst beide Kommunikationsknoten "E" und "D" in einen Einlernmodus versetzt werden,
- einer der Kommunikationsknoten "E" oder "D" aktiv eine Einlernprozedur initialisiert.

3. Verwendung einer energieautarken Sende-/Empfangsvorrichtung bei einem Verfahren gemäß Anspruch 1 oder 2, wobei die energieautarke Sende-/Empfangsvorrichtung Teil eines Vermittlungsknotens (V11 bis V33) und/oder Teil eines Kommunikationsknotens in einem Funknetzwerk ist.
